# EUROPEAN PATENT SPECIFICATION

(11) **EP 4 024 200 B1**
(45) Date of publication and mention of the grant of the patent: **25.11.2026**
(21) Application number: 19946085.8
(22) Date of filing: 20.09.2019
(51) Int. Cl.: G06F 7/523, G06F 7/544

(54) **MULTIPLIER**
MULTIPLIKATOR
MULTIPLICATEUR

(43) Date of publication of application: 06.07.2022
(73) Proprietor: Huawei Technologies Co., Ltd., Longgang District Shenzhen, Guangdong 518129 (CN)
(72) Inventor: LEE, Chun Hang, Shenzhen, Guangdong 518129 (CN); DONG, Zhenjiang, Shenzhen, Guangdong 518129 (CN)
(74) Representative: Maiwald GmbH
(86) International application number: PCT/CN2019/106902
(87) International publication number: WO 2021/051376

(56) References cited:
- CN-A- 105 183 424
- CN-A- 106 897 046
- CN-A- 107 977 191
- CN-A- 108 733 347
- CN-A- 108 733 347
- CN-A- 108 733 347
- US-A1- 2004 015 533
- US-A1- 2009 030 963
- US-A1- 2013 138 711

## Description

### TECHNICAL FIELD

This application relates to digital circuit technologies, and in particular, to a multiplier.

### BACKGROUND

Convolutional neural networks (CNNs) are widely used in image and speech recognition. Both training and inference of the CNNs require hardware to perform a large quantity of multiplication operations, and these multiplication operations are usually multiplication operations for different data formats. For example, a current mainstream processor or accelerator for implementing neural network computation may support 4-bit integers (integer 4, INT 4), 8-bit integers (integer 8, INT 8), or 16-bit floating point numbers (floating point 16, FP16).

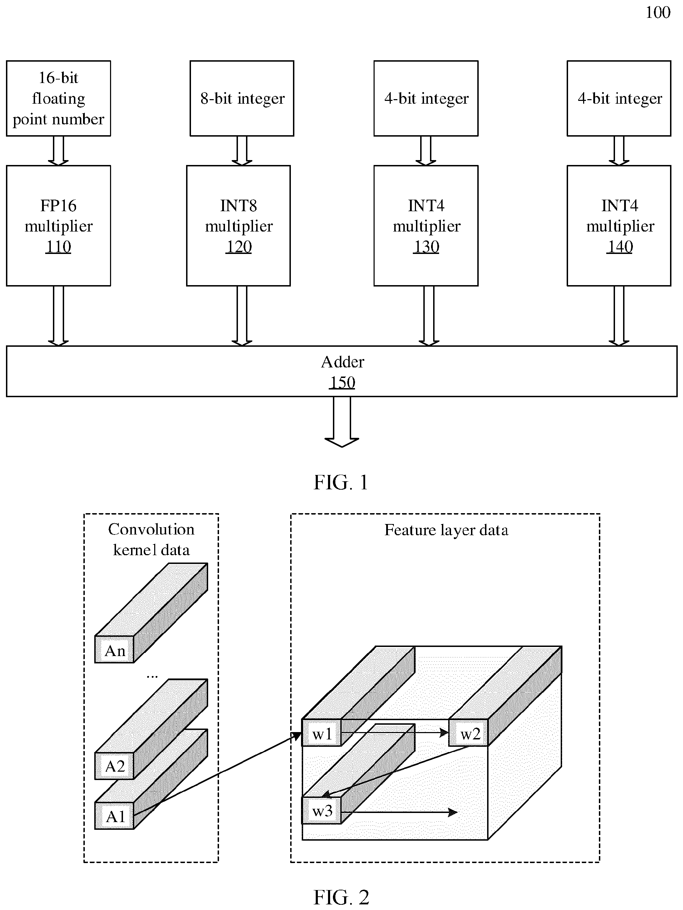

FIG. 1 shows a multiplier group 100 supporting different data bit widths, including an FP16 multiplier 110 that processes 16-bit floating point numbers, an INT8 multiplier 120 that processes 8-bit integers, and two INT4 multipliers 130 and 140 that process 4-bit integers. The four multipliers are connected in parallel, and output calculation results to an adder 150. The adder 150 performs accumulation and calculates a final result. To implement compatibility with multiplication of 4-bit integers on the basis of multiplication of 16-bit floating point numbers and 8-bit integers, the multiplier group 100 incorporates the INT4 multipliers 130 and 140, resulting in an area increase of about 90% and a power consumption increase of about 20%. Although a high bit width multiplier may be compatible with low bit width multiplication operations, for example, the FP16 multiplier 110 may process 4-bit integer multiplication operations, the processing method may waste resources of the FP16 multiplier, thereby reducing calculation efficiency of the multiplier group 100.

CN 108 733 347 A provides a data processing method and device. The method includes: acquiring a first set of to-be-multiplied data, bit width of each piece of data therein, a second set of to-be-multiplied data and bit width of each piece of data therein; merging all the data in the first set of to-be-multiplied data through a preset data merging manner, then determining that obtained data are a first multiplier, merging all the data in the second set of to-be-multiplied data, and then determining that obtained data are a second multiplier; carrying out a multiplication operation on the first multiplier and the second multiplier through a preset fixed-point multiplication device to obtain multiplication result data; and extracting a result of multiplication of each piece of data in the first set of to-be-multiplied data and each piece of data in the second set of to-be-multiplied data from the multiplication result data according to the preset data merging manner, the bit width of each piece of data in the first set of to-be-multiplied data and the bit width of each piece of data in the second set of to-be-multiplied data.

### SUMMARY

Embodiments of this application provide a multiplier, to simultaneously implement a plurality of low bit width multiplication operations. The invention is defined by the appended set of claims.

According to a first aspect, an embodiment of this application provides a multiplier, including a multiplicator input end for receiving multiplicator data, a multiplicand input end for receiving multiplicand data, a mask circuit for masking processing, and a multiplication operation circuit. The multiplicator input end is further configured to store the first multiplicator in low bits of a storage circuit of the multiplicator input end and the second multiplicator in high bits of the storage circuit of the multiplicator input end and to set other idle bits than the first multiplicator (a0) and the second multiplicator to 0. A sum of bit widths of a first multiplicator and a second multiplicator included in the multiplicator data is less than a bit width of the multiplicator data, that is, less than a bit width of the multiplicator input end. Similarly, a sum of bit widths of a first multiplicand and a second multiplicand included in the multiplicand data is also less than a bit width of the multiplicand input end. The mask circuit includes a first mask and a second mask, configured to respectively mask the first multiplicator and mask the second multiplicator in the multiplicator data to obtain a first mask result and a second mask result. Positions where the first multiplicator and the second multiplicator are stored in the multiplicator input end are the same as positions where the first multiplicand and the second multiplicand stored in the multiplicand input end. Alternatively, a position where the first multiplicator is stored in the multiplicator input end is the same as a position where the second multiplicand is stored in the multiplicand input end, and a position where the second multiplicator is stored in the multiplicator input end is the same as a position where the first multiplicand is stored in the multiplicand input end. The multiplication operation circuit is configured to respectively multiply the first mask result and the second mask result by the first multiplicand and the second multiplicand to obtain two multiplication results.

The mask circuit in the multiplier may mask a plurality of low bit width multiplicators respectively to calculate partial products corresponding to different multiplicators. Therefore, the multiplier can be adapted to multiplication operations of a plurality of low bit width multiplicators and a plurality of low bit width multiplicands in different data formats, thereby resolving a problem of a hardware resource waste caused because a single multiplier can process a multiplication operation of only one data format. Using the multiplier to implement multiplication operations of different data formats can reduce a hardware area occupied by the multiplier and reduce power consumption and overheads.

In a possible implementation, the multiplication operation circuit includes a Booth encoder. The Booth encoder may be a Booth encoder based on Radix-4, Radix-8, or another mode. Using the Booth encoder to implement a multiplication operation can reduce a hardware area of the multiplier and reduce power consumption.

In a possible implementation, the multiplication operation circuit further includes a partial product calculation circuit configured to perform partial product calculation based on encoding results generated by the Booth encoder, and an accumulator configured to accumulate a plurality of partial products generated by the partial product calculation circuit. The multiplicand is encoded, partial products of encoding results and a mask result corresponding to the multiplicand are calculated, and finally the obtained partial products are accumulated to implement a multiplication operation, thereby further saving hardware resources.

In a possible implementation, the Booth encoder includes a plurality of sub-encoders, configured to perform Booth encoding on the first multiplicand to obtain a first encoding result, and perform Booth encoding on the second multiplicand to obtain a second encoding result. There may be one or more encoding results. The partial product calculation circuit is specifically configured to calculate a first partial product of the first encoding result and the first mask result, and calculate a second partial product of the second encoding result and the second mask result. A quantity of partial products is the same as a quantity of encoding results. The accumulator is specifically configured to perform accumulation on the first partial product to obtain a result of multiplying the first multiplicator and the first multiplicand, and perform accumulation on the second partial product to obtain a result of multiplying the second multiplicator and the second multiplicand.

In a possible implementation, the multiplier further includes an adder, configured to add the result, obtained by the accumulator, of multiplying the first multiplicator and the first multiplicand and the result, obtained by the accumulator, of multiplying the second multiplicator and the second multiplicand. The adder can add results of all low bit width multiplication operations to implement a convolution calculation function.

In a possible implementation, the multiplier further includes a shifter, configured to shift the multiplication operation results obtained by the accumulator. A final calculation result may be obtained by shifting the multiplication operation results.

In a possible implementation, the data in the multiplicand input end includes the first multiplicand located at a less significant bit of the multiplicand input end, the second multiplicand located at a more significant bit, one extended bit of 0 inserted at an end of a least significant bit of the first multiplicand, and another bit set to 0 other than the first multiplicand, the second multiplicand, and the extended bit in the multiplicand input end. The multiplicator data includes: the first multiplicator located at a less significant bit of the multiplicator input end, the second multiplicator located at a more significant bit, and another bit set to 0 other than the first multiplicator and the second multiplicator in the multiplicator input end. A position of the first multiplicator in the multiplicator input end is the same as a position of the first multiplicand in the multiplicand input end, and a position of the second multiplicator in the multiplicator input end is the same as a position of the second multiplicand in the multiplicand input end. The another bit is set to 0, so that an encoding result of the bit set to 0 does not affect subsequent partial product calculation and partial product accumulation. The two multiplicators and the two multiplicands are respectively located at the same positions, so that when the accumulator accumulates partial products, no additional shift operation is required to align the partial products, thereby saving hardware resources.

In a possible implementation, the first multiplicand and the second multiplicand in the multiplicand input end are separated by at least one bit of 0, the first multiplicator and the second multiplicator in the multiplicator input end are separated by at least one bit of 0, and the multiplier further includes a selector, configured to output data of a most significant bit of the first multiplicand to a most significant bit of a corresponding first sub-encoder, and output data 0 to a least significant bit of a sub-encoder that is adjacent to the first sub-encoder and that encodes an idle bit. The idle bit is a bit set to 0 between the first multiplicand and the second multiplicand. When multiplicands and multiplicators are stored in the multiplicand input end and the multiplicator input end in the foregoing manner, the selector may implement allocation of valid data and 0, so that a sub-encoder correctly encodes data in the multiplicand input end.

In a possible implementation, a most significant bit of the first multiplicand in the multiplicand input end is adjacent to a least significant bit of the second multiplicand, a most significant bit of the first multiplicator in the multiplicator input end is adjacent to a least significant bit of the second multiplicator, and the multiplier further includes a selector, configured to output data of the most significant bit of the first multiplicand to a most significant bit of a corresponding first sub-encoder, and output data 0 to a least significant bit of a second sub-encoder. The second sub-encoder is a sub-encoder that is adjacent to the first sub-encoder and that encodes the second multiplicand. When multiplicands and multiplicators are stored in the multiplicand input end and the multiplicator input end in the foregoing manner, the selector may implement allocation of valid data and 0, so that a sub-encoder correctly encodes data in the multiplicand input end.

In a possible implementation, the partial product sub-circuit includes a plurality of first partial product sub-circuits, a plurality of second partial product sub-circuits, and a plurality of third partial product sub-circuits. The plurality of first partial product sub-circuits are configured to respectively calculate a plurality of first partial products based on the first mask result by using a plurality of encoding results of the first multiplicand as control signals. The plurality of second partial product sub-circuits are configured to respectively calculate a plurality of second partial products based on the second mask result by using a plurality of encoding results of the second multiplicand as control signals. The plurality of third partial product sub-circuits are configured to respectively calculate a plurality of third partial products based on data in the multiplicator input end by using idle bits as control signals. The idle bits are bits set to 0 in the multiplicand input end. The accumulator is specifically configured to accumulate the plurality of first partial products, the plurality of second partial products, and the plurality of third partial products.

In a possible implementation, the multiplier further includes a switch. The switch is configured to: when in an on state, activate the mask circuit, the shifter, and the adder; and when in an off state, disable the mask circuit, the shifter, and the adder, in other words, the mask circuit, the shifter, and the adder directly transmit received data. The switch controls the mask circuit, the shifter, and the adder, so that the multiplier can switch between two modes of a plurality of multiplication operations and one multiplication operation, thereby further enhancing a capability of the multiplier to process multiplication operations.

In a possible implementation, the multiplier further includes a switch. The switch is configured to: when in an on state, activate the mask circuit; and when in an off state, disable the mask circuit, in other words, the mask circuit directly transmits received data. The switch controls the mask circuit, so that the multiplier can switch between two modes of a plurality of multiplication operations and one multiplication operation, thereby further enhancing a capability of the multiplier to process multiplication operations.

In a possible implementation, the mask circuit includes two AND gates, configured to respectively mask the first multiplicator and mask the second multiplicator in the multiplicator data to output the two mask results. Using two AND gates to implement a function of the mask circuit can further simplify a circuit structure of the multiplier, save hardware resources, and reduce power consumption.

In a possible implementation, a 1^{st} sub-encoder of the plurality of sub-encoders in the encoder is configured to perform Booth encoding on data of an extended bit and an LSB to a (k - 2)^{th} bit of the multiplicand input end, and an i^{th} sub-encoder is configured to perform Booth encoding on data of an (i x (k - 1) + 1)^{th} bit to an ((i + 1) x (k - 1) + 1)^{th} bit of the multiplicand input end, where k is a bit width of each sub-encoder, k ≥ 2 and k is an integer, and i ≥ 2 and i is an integer.

In a possible implementation, the multiplier further includes a selector, configured to output data of the most significant bit of the first multiplicand to a most significant bit of an x^{th} sub-encoder, and output 0 to a least significant bit of an (x + 1)^{th} sub-encoder. The x^{th} sub-encoder is a sub-encoder that encodes the most significant bit *MSB*₂ to an (*MSB*₂ - k + 1)^{th} bit of the first multiplicand.

In a possible implementation, the multiplier further includes a selector, configured to output 0 to a most significant bit of an x^{th} sub-encoder, and output data of the least significant bit of the second multiplicand to a least significant bit of an (x + 1)^{th} sub-encoder. The x^{th} sub-encoder is a sub-encoder that encodes the most significant bit *MSB*₁ to an (*MSB*₁ - k +1)^{th} bit of the first multiplicand, and the (x + 1)^{th} sub-encoder is a sub-encoder that encodes the least significant bit *LSB*₂ to an (*LSB*₂ - k + 1)^{th} bit of the second multiplicand.

According to a second aspect, an embodiment of this application provides a multiplication calculation method, applied to a multiplier. The multiplier includes a multiplicator input end and a multiplicand input end, and the multiplication calculation method includes: receiving multiplicator data, where the multiplicator data includes a first multiplicator and a second multiplicator, wherein the first multiplicator is stored in low bits of a storage circuit of the multiplicator input end, the second multiplicator is stored in high bits of the storage circuit of the multiplicator input end, and other idle bits than the first multiplicator and the second multiplicator are set to 0, and a sum of a bit width of the first multiplicator and a bit width of the second multiplicator is less than a bit width of the multiplicator data; using a first mask to mask the second multiplicator in the multiplicator data to obtain a first mask result, and using a second mask to mask the first multiplicator in the multiplicator data to obtain a second mask result; receiving a first multiplicand and a second multiplicand, where a sum of a bit width of the first multiplicand and a bit width of the second multiplicand is less than a bit width of the multiplicand input end, wherein positions where the first multiplicator and the second multiplicator are stored in the multiplicator input end are the same as positions where the first multiplicand and the second multiplicand stored in the multiplicand input end. Alternatively, a position where the first multiplicator is stored in the multiplicator input end is the same as a position where the second multiplicand is stored in the multiplicand input end, and a position where the second multiplicator is stored in the multiplicator input end is the same as a position where the first multiplicand is stored in the multiplicand input end; and performing a multiplication operation on the first mask result and the first multiplicand to obtain a result of multiplying the first multiplicator and the first multiplicand, and performing a multiplication operation on the second mask result and the second multiplicand to obtain a result of multiplying the second multiplicator and the second multiplicand.

The mask circuit in the multiplier may mask a plurality of low bit width multiplicators respectively to calculate partial products corresponding to different multiplicators. Therefore, the multiplier can be adapted to multiplication operations of a plurality of low bit width multiplicators and a plurality of low bit width multiplicands in different data formats, thereby resolving a problem of a hardware resource waste caused because a single multiplier can process a multiplication operation of only one data format. Using the multiplier to implement multiplication operations of different data formats can reduce a hardware area occupied by the multiplier and reduce power consumption and overheads.

In a possible implementation, the step of performing a multiplication operation on the first mask result and the first multiplicand to obtain a result of multiplying the first multiplicator and the first multiplicand, and performing a multiplication operation on the second mask result and the second multiplicand to obtain a result of multiplying the second multiplicator and the second multiplicand includes: performing Booth encoding on the first multiplicand and the second multiplicand. Using a Booth encoder to implement a multiplication operation can reduce a hardware area of the multiplier and reduce power consumption.

In a possible implementation, the step of performing a multiplication operation on the first mask result and the first multiplicand to obtain a result of multiplying the first multiplicator and the first multiplicand, and performing a multiplication operation on the second mask result and the second multiplicand to obtain a result of multiplying the second multiplicator and the second multiplicand further includes: performing partial product calculation based on encoding results generated by the Booth encoding, to obtain a plurality of partial products; and accumulating the plurality of partial products. The multiplicand is encoded, partial products of encoding results and a mask result corresponding to the multiplicand are calculated, and finally the obtained partial products are accumulated to implement a multiplication operation, thereby further saving hardware resources.

In a possible implementation, the step of performing Booth encoding on the first multiplicand and the second multiplicand includes: performing, by using a plurality of sub-encoders, Booth encoding on the first multiplicand to obtain at least one first encoding result, and Booth encoding on the second multiplicand to obtain at least one second encoding result. The step of performing partial product calculation based on encoding results generated by the Booth encoding, to obtain a plurality of partial products includes: calculating at least one first partial product of the at least one first encoding result and the first mask result, and calculating at least one second partial product of the at least one second encoding result and the second mask result. The step of accumulating the plurality of partial products includes: performing accumulation on the at least one first partial product to obtain the result of multiplying the first multiplicator and the first multiplicand, and performing accumulation on the at least one second partial product to obtain the result of multiplying the second multiplicator and the second multiplicand.

In a possible implementation, the multiplication calculation method further includes: adding the result, obtained by the accumulator, of multiplying the first multiplicator and the first multiplicand and the result, obtained by the accumulator, of multiplying the second multiplicator and the second multiplicand. Adding results of all low bit width multiplication operations can implement a convolution calculation function.

In a possible implementation, the multiplication calculation method further includes: shifting the result, obtained by the accumulator, of multiplying the first multiplicator and the first multiplicand and the result, obtained by the accumulator, of multiplying the second multiplicator and the second multiplicand.

In a possible implementation, data in the multiplicand input end includes the first multiplicand located at a less significant bit of the multiplicand input end, the second multiplicand located at a more significant bit of the multiplicand input end, one extended bit of 0 inserted at an end of a least significant bit of the first multiplicand, and another bit set to 0 other than the first multiplicand, the second multiplicand, and the extended bit in the multiplicand input end. The multiplicator data includes the first multiplicator located at a less significant bit of the multiplicator input end, the second multiplicator located at a more significant bit of the multiplicator input end, and another bit set to 0 other than the first multiplicator and the second multiplicator in the multiplicator input end. A position of the first multiplicator in the multiplicator input end is the same as a position of the first multiplicand in the multiplicand input end, and a position of the second multiplicator in the multiplicator input end is the same as a position of the second multiplicand in the multiplicand input end. The another bit is set to 0, so that an encoding result of the bit set to 0 does not affect subsequent partial product calculation and partial product accumulation. The two multiplicators and the two multiplicands are respectively located at the same positions, so that when the accumulator accumulates partial products, no additional shift operation is required to align the partial products, thereby saving hardware resources.

In a possible implementation, the first multiplicand and the second multiplicand are separated by at least one bit of 0, the first multiplicator and the second multiplicator are separated by at least one bit of 0, and the multiplication calculation method further includes: outputting data of a most significant bit of the first multiplicand to a most significant bit of a corresponding first sub-encoder, and outputting data 0 to a least significant bit of a sub-encoder that is adjacent to the first sub-encoder and that encodes an idle bit. The idle bit is a bit set to 0 between the first multiplicand and the second multiplicand. When multiplicands and multiplicators are stored in the multiplicand input end and the multiplicator input end in the foregoing manner, allocation of valid data and 0 may be implemented, so that a sub-encoder correctly encodes data in the multiplicand input end.

In a possible implementation, a most significant bit of the first multiplicand is adjacent to a least significant bit of the second multiplicand, a most significant bit of the first multiplicator is adjacent to a least significant bit of the second multiplicator, and the multiplication calculation method further includes: outputting data of the most significant bit of the first multiplicand to a most significant bit of a corresponding first sub-encoder, and outputting data 0 to a least significant bit of a second sub-encoder. The second sub-encoder is a sub-encoder that is adjacent to the first sub-encoder and that encodes the second multiplicand. When multiplicands and multiplicators are stored in the multiplicand input end and the multiplicator input end in the foregoing manner, allocation of valid data and 0 may be implemented, so that a sub-encoder correctly encodes data in the multiplicand input end.

In a possible implementation, the multiplication calculation method further includes: using a switch, where when the switch is in an on state, masking processing is performed; and when the switch is in an off state, masking processing is not performed. With control of the switch, the multiplier can switch between two modes of a plurality of multiplication operations and one multiplication operation, thereby further enhancing a capability of the multiplier to process multiplication operations.

In a possible implementation, the step of masking the second multiplicator in the multiplicator data to obtain a first mask result, and masking the first multiplicator in the multiplicator data to obtain a second mask result includes: using two AND gates, to respectively mask the first multiplicator and mask the second multiplicator in the multiplicator data to output the two mask results. Using two AND gates to implement a mask function can further simplify a circuit structure of the multiplier, save hardware resources, and reduce power consumption.

According to a third aspect, an embodiment of this application provides a data processing system, including: an encoder, configured to encode a first multiplicand and a second multiplicand to obtain a plurality of encoding results, where a sum of bit widths of the first multiplicand and the second multiplicand is less than a bit width of a multiplicand input end of the encoder; and a plurality of multipliers. Each multiplier includes: a mask circuit, configured to respectively mask a first multiplicator and a second multiplicator to obtain two mask results, where a sum of bit widths of the first multiplicator and the second multiplicator is less than a bit width of a multiplicator input end of each multiplier; a partial product calculation circuit, configured to respectively calculate, by using the plurality of encoding results as control signals, a plurality of partial products based on two mask results respectively corresponding to the plurality of encoding results; and an accumulator, configured to accumulate the plurality of partial products to obtain an accumulation result.

Because the plurality of multipliers may share the encoding results of the encoder, the encoder may not be used inside the multipliers to perform repeated encoding, thereby simplifying hardware design inside the multipliers, helping reduce hardware complexity, and helping improve processing efficiency of the multipliers because processing steps are simplified.

In a possible implementation, each multiplier further includes the multiplicator input end, configured to receive the first multiplicator and the second multiplicator. The mask circuit includes two masks, configured to respectively mask the first multiplicator and mask the second multiplicator in data of the multiplicator input end by using AND gates, to respectively output a first mask result and a second mask result.

In a possible implementation, the encoder includes the multiplicand input end, configured to receive the first multiplicand and the second multiplicand. The encoder includes a plurality of sub-encoders, configured to perform Booth encoding on data in the multiplicand input end.

In a possible implementation, the partial product calculation circuit includes a plurality of first partial product sub-circuits and a plurality of second partial product sub-circuits. The plurality of first partial product sub-circuits are configured to respectively calculate a plurality of first partial products based on the first mask result by using a plurality of encoding results of the first multiplicand as control signals. The plurality of second partial product sub-circuits are configured to respectively calculate a plurality of second partial products based on the second mask result by using a plurality of encoding results of the second multiplicand as control signals.

In a possible implementation, the multiplicand input end is further configured to: store the first multiplicand at a less significant bit of the multiplicand input end, store the second multiplicand at a more significant bit of the multiplicand input end, insert one extended bit of 0 at an end of a least significant bit of the first multiplicand, and set an idle bit to 0. The idle bit is another bit other than the first multiplicand, the second multiplicand, and the extended bit in the multiplicand input end. The partial product calculation circuit further includes a plurality of third partial product sub-circuits, configured to respectively calculate a plurality of third partial products based on data in the multiplicator input end by using idle bits as control signals.

In a possible implementation, a 1^{st} sub-encoder of the plurality of sub-encoders is configured to perform Booth encoding on data of an extended bit and an LSB to a (k - 2)^{th} bit of the multiplicand input end, and an i^{th} sub-encoder is configured to perform Booth encoding on data of an (i x (k - 1) + 1)^{th} bit to an ((i + 1) x (k - 1) + 1)^{th} bit of the multiplicand input end, where k is a bit width of each sub-encoder, k ≥ 2 and k is an integer, and i ≥ 1 and i is an integer.

In a possible implementation, the accumulator is configured to accumulate the plurality of first partial products, the plurality of second partial products, and the plurality of third partial products.

In a possible implementation, the multiplicand input end is further configured to: store the first multiplicand at a less significant bit of the multiplicand input end, store the second multiplicand at a more significant bit of the multiplicand input end, and separate the first multiplicand and the second multiplicand by at least one bit of 0. The multiplicator input end is further configured to: store the first multiplicator at a less significant bit of the multiplicator input end, store the second multiplicator at a more significant bit of the multiplicator input end, and separate the first multiplicator and the second multiplicator by at least one bit of 0. Positions where the first multiplicator and the second multiplicator are stored in the multiplicator input end are respectively the same as positions where the first multiplicator and the second multiplicand stored in the multiplicator input end.

In a possible implementation, the multiplier further includes a selector. The selector is configured to output data of a most significant bit of the first multiplicand to a most significant bit of an x^{th} sub-encoder, and output 0 to a least significant bit of an (x + 1)^{th} sub-encoder. The x^{th} sub-encoder is a sub-encoder that encodes the most significant bit *MSB*₂ to an (*MSB*₂ - k + 1)^{th} bit of the first multiplicand.

In a possible implementation, the multiplier further includes an adder. The adder is configured to add a result of accumulating the plurality of first partial products and a result of accumulating the plurality of second partial products.

In a possible implementation, the multiplicand input end is further configured to: store the first multiplicand at a less significant bit of the multiplicand input end, store the second multiplicand at a more significant bit of the multiplicand input end, and make a least significant bit of the second multiplicand adjacent to a most significant bit of the first multiplicand. The multiplicator input end is further configured to: store the first multiplicator at a more significant bit of the multiplicator input end, store the second multiplicator at a less significant bit of the multiplicator input end, and make a least significant bit of the first multiplicator adjacent to a most significant bit of the second multiplicator. A position where the first multiplicator is stored in the multiplicator input end is the same as a position where the second multiplicand is stored in the multiplicand input end, and a position where the second multiplicator is stored in the multiplicator input end is the same as a position where the first multiplicand is stored in the multiplicand input end.

In a possible implementation, the multiplier further includes a selector. The selector is configured to output 0 to a most significant bit of an x^{th} sub-encoder, and output data of the least significant bit of the second multiplicand to a least significant bit of an (x + 1)^{th} sub-encoder. The x^{th} sub-encoder is a sub-encoder that encodes the most significant bit *MSB*₁ to an (*MSB*₁ - k + 1)^{th} bit of the first multiplicand, the (x + 1)^{th} sub-encoder is a sub-encoder that encodes the least significant bit *LSB*₂ to an (*LSB*₂ - k + 1)^{th} bit of the second multiplicand.

In a possible implementation, the multiplier further includes a shifter. The shifter is configured to shift a result of accumulating the plurality of first partial products and a result of accumulating the plurality of second partial products.

In a possible implementation, the plurality of first partial product sub-circuits are specifically configured to respectively multiply the plurality of encoding results of the first multiplicand by the first mask result, to calculate the plurality of first partial products. The plurality of second partial product sub-circuits are specifically configured to respectively multiply the plurality of encoding results of the second multiplicand by the second mask result, to calculate the plurality of second partial products. The plurality of third partial product sub-circuits are specifically configured to respectively multiply a plurality of encoding results of the idle bits by data received by the multiplicator input end, to calculate the plurality of third partial products.

In a possible implementation, the multiplier further includes a switch. The switch is configured to: when in an on state, activate the mask circuit, the selector, the shifter, or the adder.

In a possible implementation, the first multiplicand and the second multiplicand are convolution kernel data, and the first multiplicator and the second multiplicator are feature layer data. Alternatively, the first multiplicand and the second multiplicand are feature layer data, and the first multiplicator and the second multiplicator are convolution kernel data.

In a possible implementation, the plurality of multipliers each further include a plurality of storage units. One storage unit in storage units of every two multipliers is configured to receive the plurality of encoding results, and the other storage unit is configured to read the plurality of encoding results.

According to a fourth aspect, an embodiment of this application provides a multiplication processing system. The multiplication processing system reads a configuration file from a memory coupled to the multiplication processing system, so that the multiplication processing system may be configured as the multiplier according to any possible implementation of the first aspect, or configured as the data processing system according to any possible implementation of the third aspect.

According to a fifth aspect, an embodiment of this application provides a computer-readable storage medium. The computer-readable storage medium stores a computer program. When the computer program is executed by a processor, the method according to any possible implementation of the second aspect is implemented.

According to a sixth aspect, an embodiment of this application provides a computer program. The computer program includes instructions. When the computer program is executed by a computer, the computer is enabled to perform the method according to any possible implementation of the second aspect.

### BRIEF DESCRIPTION OF DRAWINGS

FIG. 1 is a multiplier group in a conventional technology;
FIG. 2 is a schematic diagram of a convolution processing principle according to an embodiment of this application;
FIG. 3 is a data processing system for convolution processing according to an embodiment of this application;
FIG. 4 is a multiplier according to an embodiment of this application;
FIG. 5 is another multiplier according to an embodiment of this application;
FIG. 6 is another specific multiplier according to an embodiment of this application;
FIG. 7A and FIG. 7B are another more specific multiplier according to an embodiment of this application;
FIG. 8 is still another specific multiplier according to an embodiment of this application;
FIG. 9A and FIG. 9B are still another more specific multiplier according to an embodiment of this application;
FIG. 10 is a data processing system according to an embodiment of this application;
FIG. 11 is a multiplication calculation method according to an embodiment of this application; and
FIG. 12 is a multiplication processing system according to an embodiment of this application.

### DESCRIPTION OF EMBODIMENTS

The following clearly describes technical solutions in embodiments of this application with reference to accompanying drawings in embodiments of this application.

FIG. 2 is a schematic diagram of a convolution processing principle of a convolutional neural network (Convolutional Neural Network, CNN). In FIG. 2, for a feature map (including convolution kernel data and feature layer data), the convolutional neural network performs convolution processing on convolution kernel data A1, A2, ..., and An and feature layer data w1, w2, and w3. Specifically, each convolution kernel is moved pixel by pixel along a row direction and starting from the first pixel of the feature map. When moved to an end of the row, the convolution kernel is moved down one pixel in a column direction, and returns to a start position in the row direction, and the process of moving in the row direction is repeated until all pixels in the feature map are traversed.

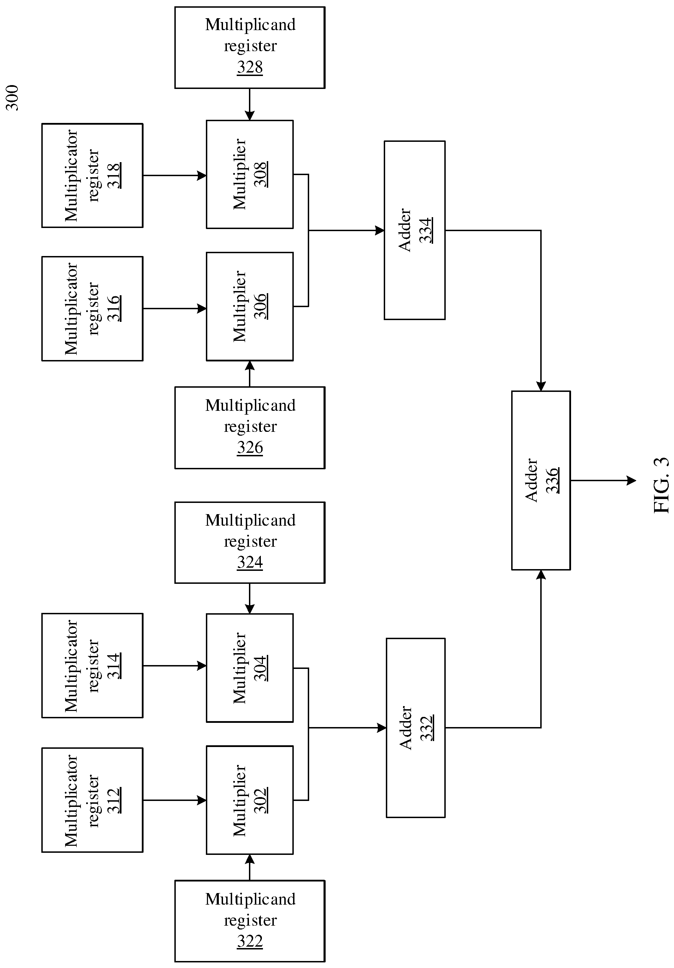

FIG. 3 shows a data processing system 300 that may be configured for convolution processing of a convolution neural network CNN, including a multiplier 302, a multiplier 304, a multiplier 306, and a multiplier 308 for multiplication calculation. The multiplier 302 receives multiplicator data stored in a multiplicator register 312 and multiplicand data stored in a multiplicand register 322, and performs a multiplication operation. The multiplier 304 receives multiplicator data stored in a multiplicator register 314 and multiplicand data stored in a multiplicand register 324, and performs a multiplication operation. The multiplier 306 receives multiplicator data stored in a multiplicator register 316 and multiplicand data stored in a multiplicand register 326, and performs a multiplication operation. The multiplier 308 receives multiplicator data stored in a multiplicator register 318 and multiplicand data stored in a multiplicand register 328, and performs a multiplication operation. An adder 332 in the data processing system 300 adds multiplication operation results obtained by the multiplier 302 and the multiplier 304. An adder 334 in the data processing system 300 adds multiplication operation results obtained by the multiplier 306 and the multiplier 308. Finally, an adder 336 in the data processing system 300 further adds results obtained by the adder 332 and the adder 334, to obtain a final result. Because the data processing system 300 may implement a large quantity of multiplication and accumulation operations, the data processing system 300 may be configured for convolution processing of a convolutional neural network CNN. In an implementation, convolution kernel data may be respectively stored in the multiplicator registers, and feature layer data may be respectively stored in the multiplicand registers. In another implementation, convolution kernel data may be respectively stored in the multiplicand registers, and feature layer data may be respectively stored in the multiplicator registers.

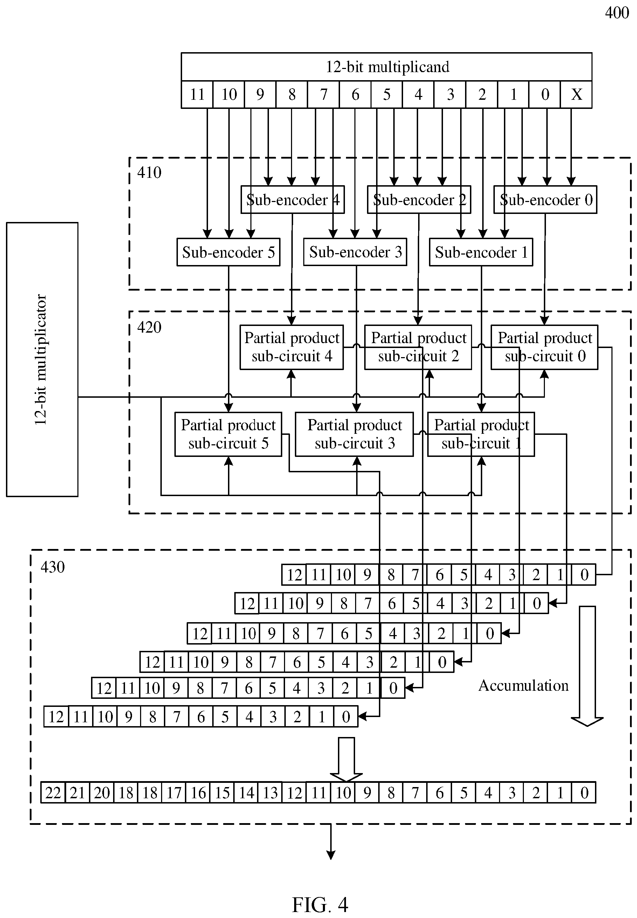

The multiplier may be a multiplier 400 shown in FIG. 4, including an encoder (encoder) 410, a partial product (partial product) calculation circuit 420, and an accumulator (accumulator) 430. FIG. 4 shows an example for description, in which both a multiplicator and a multiplicand that are input to the multiplier 400 have 12 bits. In the multiplier 400, one bit of 0 (replaced by x in FIG. 4) is first inserted at the end of the 12-bit multiplicand to extend the multiplicand to 13 bits. Then, the extended 13-bit multiplicand is encoded. Specifically, the encoder 410 includes a sub-encoder 0, a sub-encoder 1, a sub-encoder 2, a sub-encoder 3, a sub-encoder 4, and a sub-encoder 5 shown in FIG. 4. Every three bits of data in the extended multiplicand are encoded by a sub-encoder at an interval of two bits. For example, the sub-encoder 0 encodes 0 (replaced by x in FIG. 4) inserted at the end of the multiplicand, an LSB (Least Significant Bit, least significant bit), and a 1^{st} bit; the sub-encoder 1 encodes the 1^{st} bit, a 2^{nd} bit, and a 3^{rd} bit; the sub-encoder 2 encodes the 3^{rd} bit, a 4^{th} bit, and a 5^{th} bit; and so on, as shown in FIG. 4. The LSB, the 1^{st} bit, the 2^{nd} bit, and the like all refer to data in bits shown in FIG. 4 before the extension.

A manner in which the sub-encoder encodes every three bits of data may be Booth(Booth) encoding. The Booth encoding may follow a rule in Table 1:

**Table 1**

| *y*_{*i*+1}*yᵢy*_{*i-*1} of multiplicand | Encoding result |
|---|---|
| 0 0 0 | 0 |
| 0 0 1 | X |
| 0 1 0 | X |
| 0 1 1 | 2X |
| 1 0 0 | -2X |
| 1 0 1 | -X |
| 1 1 0 | -X |
| 111 | 0 |

where i is an integer, *y*_{*i*+1}*yᵢy*_{*i*-1} represents three consecutive bits of data in the multiplicand, and X is used to represent a multiplicator. In the rule of the foregoing table, the encoding result may alternatively be expressed as:$\left({y}_{i}+{y}_{i - 1}-{2 y}_{i + 1}\right) X$

For example, if a multiplicand is 010010111011 in binary representation, an extended multiplicand is 0100101110110. The sub-encoder 0 encodes three less significant bits, that is, 110, of the extended multiplicand based on the rule of the foregoing table, and an obtained encoding result is -X. The sub-encoder 1 encodes 101 based on the rule of the foregoing table, and an obtained encoding result is -X. The sub-encoder 2 encodes 111 based on the rule of the foregoing table, and an obtained encoding result is 0. The sub-encoder 3 encodes 101 based on the rule of the foregoing table, and an obtained encoding result is -X. The sub-encoder 4 encodes 001 based on the rule of the foregoing table, and an obtained encoding result is X. The sub-encoder 5 encodes 010 based on the rule of the foregoing table, and an obtained encoding result is X. The encoding process is shown in Table 2.

**Table 2**

| Sub-encoder | *y*_{*i*+1}*yᵢy*_{*i-*1} of multiplicand | Encoding result |
|---|---|---|
| Sub-encoder 0 | 0*y*₀*y*₁ = 1 1 0 | -X |
| Sub-encoder 1 | *y*₁*y*₂*y*₃ = 10 1 | -X |
| Sub-encoder 2 | *y*₃*y*₄*y*₅ = 1 1 1 | 0 |
| Sub-encoder 3 | *y*₅*y*₆*y*₇ = 1 0 1 | -X |
| Sub-encoder 4 | *y*₇*y*₈*y*₉ = 0 0 1 | X |
| Sub-encoder 5 | *y*₉*y*₁₀*y*₁₁ = 0 1 0 | X |

The partial product calculation circuit 420 includes a partial product sub-circuit 0, a partial product sub-circuit 1, a partial product sub-circuit 2, a partial product sub-circuit 3, a partial product sub-circuit 4, and a partial product sub-circuit 5 shown in FIG. 4. Each partial product sub-circuit receives an encoding result generated by a corresponding sub-encoder, and outputs a corresponding partial product based on a received multiplicator. Specifically, each partial product sub-circuit uses the received encoding result as a control signal, and determines the output partial product based on the input multiplicator. For example, the partial product sub-circuit 0 uses the encoding result -X as a control signal, and the multiplicator as an input, and then an output partial product is -X; the partial product sub-circuit 1 uses the encoding result -X as a control signal, and the multiplicator as an input, and then an output partial product is -X; the partial product sub-circuit 2 uses the encoding result 0 as a control signal, and the multiplicator as an input, and then an output partial product is 0; and so on. X in the partial product represents the 12-bit multiplicator.

The accumulator 430 receives a plurality of partial products generated by the plurality of partial product sub-circuits, and accumulates the partial products based on weights of bits, corresponding to each partial product, of the multiplicand. For example, the partial products generated by the partial product sub-circuit 0 to the partial product sub-circuit 5 are -X, -X, 0, -X, X, and X, respectively. Because the multiplicand is encoded at the interval of two bits, corresponding weights of every two adjacent partial product sub-circuits are in a fourfold relationship. That is, the partial product generated by the partial product sub-circuit 0 is accumulated as 2⁰(-X), the partial product generated by the partial product sub-circuit 1 is accumulated as 2²(-X), the partial product generated by the partial product sub-circuit 2 is accumulated as 2⁴(0), the partial product generated by the partial product sub-circuit 3 is accumulated as 2⁶(-X), the partial product generated by the partial product sub-circuit 4 is accumulated as 2⁸(X), and the partial product generated by the partial product sub-circuit 5 is accumulated as 2¹⁰(X). A final accumulation result is a final result obtained by multiplying the multiplicator and the multiplicand. The accumulation process may be expressed as:${2}^{2} \left({2}^{2}\left({2}^{2}\left({2}^{2}\left({2}^{2}X+X\right)+-X\right)+0\right)-X\right) - X = 1211 X$

The multiplier 400 shown in FIG. 4 may process data in different formats, such as INT4 (4-bit integer), INT8 (8-bit integer), or FP16 (16-bit floating-point number). However, when the low bit width multiplication operation is processed by using a multiplier with a relatively high bit width, a single multiplier 400 cannot be compatible with processing of the plurality of low bit width multiplication operations, and therefore cannot meet a ratio of performance requirements of the multiplier. For example, when the bit width of the multiplier is 16 bits, one INT4, INT8, or FP16 multiplication operation may be processed, but two INT8 multiplication operations or two INT4 multiplication operations cannot be simultaneously processed. Therefore, when two INT8 multiplication operations or two INT4 multiplication operations need to be processed simultaneously, two multipliers are required, thereby wasting a multiplier resource and slowing down a calculation speed of hardware.

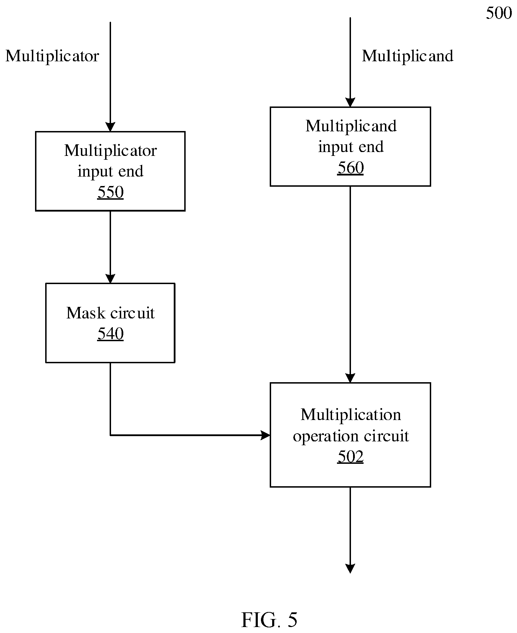

FIG. 5 is a multiplier 500 according to an embodiment of this application, and may be used in any multiplier of the data processing system 300 shown in FIG. 3. The multiplier 500 includes a multiplicator input end 550, a multiplicand input end 560, a multiplication operation circuit 502, and a mask (mask) circuit 540. The multiplicator input end 550 is configured to receive multiplicator data input to the multiplier 500, where the multiplicator data may be data of two multiplicators or data of more multiplicators. In addition, a sum of bit widths of the multiplicator data is less than a bit width of the multiplicator input end 550. For example, the bit width of the multiplicator input end 550 is 32 bits, and the multiplicator data is four multiplicators each with a bit width of 6 bits. Similarly, the multiplicand input end 560 is configured to receive multiplicand data input to the multiplier 500, where the multiplicand data may be data of two multiplicands or data of more multiplicands. In addition, a sum of bit widths of the multiplicand data is less than a bit width of the multiplicand input end 560.

In a case in which a sum of bit widths of a plurality of multiplicators participating in multiplication operation is less than the bit width of the multiplicator input end 550 of the multiplier 500, and a sum of bit widths of a plurality of multiplicands participating in multiplication operation is less than the bit width of the multiplicand input end 560 of the multiplier 500, the multiplier 500 may be configured to simultaneously perform a plurality of groups of low bit width multiplication operations. In embodiments provided in this application, an example in which the multiplier 500 processes two groups of low bit width multiplication operations is used to describe a specific structure and function of the multiplier 500. For example, in this embodiment of this application, a first multiplicand b0 is multiplied by a first multiplicator a0, and a second multiplicand b1 is multiplied by a second multiplicator a1. However, it is easy to understand that the multiplier 500 provided in this embodiment of this application may also implement more than two groups of low bit width multiplication operations. That a first multiplicand b0 is multiplied by a first multiplicator a0, and a second multiplicand b1 is multiplied by a second multiplicator a1 may be of data in different formats, for example, INT4, INT8, FP16, or another format. It should be noted that a low bit width and a high bit width in this application are two relative concepts. For example, when the bit width of the multiplicator input end or the multiplicand input end of the multiplier is twice the bit width of the multiplicator or the multiplicand, the bit width of the multiplier is of the high bit width, and the bit width of the multiplicator or multiplicand is of the low bit width. In addition, a multiplicator and a multiplicand in this application are concepts relative to each other. For example, convolution kernel data may be input to the multiplier 500 as a multiplicator, and feature layer data may be input to the multiplier 500 as a multiplicand. Alternatively, convolution kernel data may be input to the multiplier 500 as a multiplicand, and feature layer data may be input to the multiplier 500 as a multiplicator.

The mask circuit 540 in the multiplier 500 is configured to separately mask the multiplicator data, to separately obtain two mask results. Specifically, the mask circuit 540 masks the second multiplicator a1 in the multiplicator data, to obtain a first mask result that indicates the first multiplicator a0. Similarly, the masking circuit 540 masks the first multiplicator a1 in the multiplicator data, to obtain a second mask result that indicates the second multiplicator a1. For example, if the multiplicator data is 110100000101 of 12 bits, where 0101 of four less significant bits is the first multiplicator, and 1101 of four more significant bits is the second multiplicator, the first mask result is 000000000101, and the second mask result is 110100000000.

The multiplication operation circuit 502 is configured to perform a multiplication operation on the first mask result and the first multiplicand b0 to obtain a product of the first mask result and the first multiplicand b0; and perform a multiplication operation on the second mask result and the second multiplicand b1 to obtain a product of the second mask result and the second multiplicand b1.

The mask circuit 540 in the multiplier 500 may mask a plurality of low bit width multiplicators respectively to calculate partial products corresponding to different multiplicators. Therefore, the multiplier 500 can be adapted to multiplication operations of a plurality of low bit width multiplicators and a plurality of low bit width multiplicands in different data formats, thereby resolving a problem of a hardware resource waste caused because a single multiplier can process a multiplication operation of only one data format. Using the multiplier 500 to implement multiplication operations of different data formats can reduce a hardware area occupied by the multiplier and reduce power consumption and overheads.

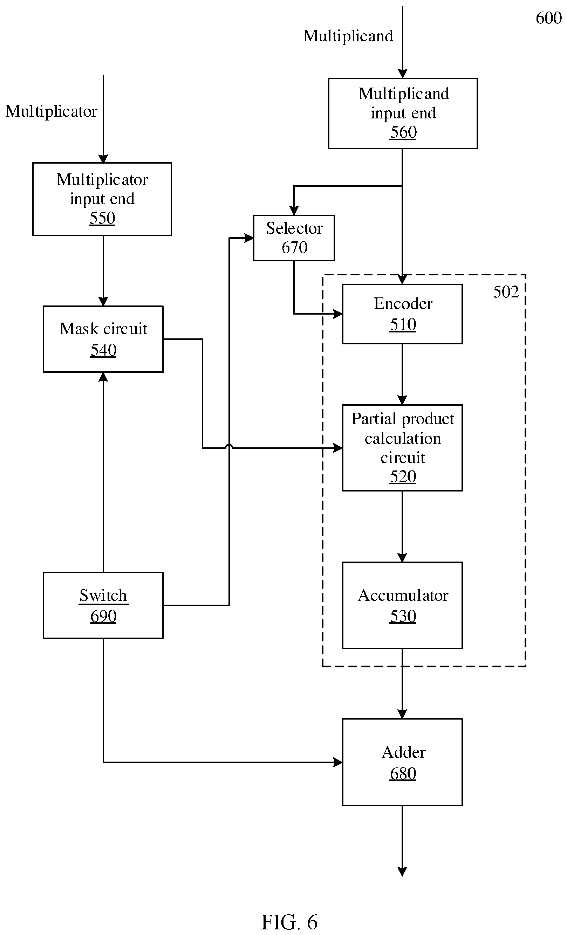

FIG. 6 shows a specific multiplier 600 according to an embodiment of this application. The multiplier 600 includes the multiplication operation circuit 502, the multiplicator input end 550, the multiplicand input end 560, and the mask circuit 540 shown in FIG. 5. Specifically, the multiplication operation circuit may include an encoder (encoder) 510, a partial product (partial product) calculation circuit 520, and an accumulator (accumulator) 530.

Specifically, the encoder 510 in the multiplier 500 is configured to encode the first multiplicand b0 and the second multiplicand b1, to separately obtain a first encoding result and a second encoding result, where both the first encoding result and the second encoding result may be a plurality of encoding results. An encoding manner used by the encoder 510 may be Booth encoding, in other words, the encoder 510 may be a Booth encoder. In an implementation, the encoder 510 may encode the first multiplicand b0 and the second multiplicand b1 in a radix-4 manner: encoding every three bits of data at an interval of two bits according to the rule described in Table 1. In another implementation, the encoder 510 may encode the first multiplicand b0 and the second multiplicand b1 in a radix-8 manner: encoding every four bits of data at an interval of three bits according to a preset rule. The encoder 510 may also use another manner, for example, a radix-16. For ease of description, a radix-4 manner is used as an example to describe a working principle of the encoder 510 in this application.

The partial product calculation circuit 520 is configured to calculate a partial product based on the encoding result. Specifically, the partial product calculation circuit 520 is configured to: calculate, by using the first encoding result and the second encoding result obtained by the encoder 510 as control signals, a plurality of partial products based on two mask results corresponding to the first encoding result and the second encoding result, in other words, calculate a first partial product of the first encoding result and the first mask result and calculate a second partial product of the second encoding result and the second mask result. The partial product calculation circuit 520 may determine a relationship between a corresponding encoding result and a corresponding partial product based on the control signal. For example, when the control signal indicates that the encoding result is -X, an output partial product is -1 times the corresponding mask result.

The accumulator 530 is configured to accumulate the plurality of partial products (for example, the first partial product and the second partial product) obtained by the partial product calculation circuit 520, to obtain an accumulation result. Because the partial product calculation circuit 520 separately performs partial product calculation on the plurality of encoding results to obtain the plurality of partial products, the accumulator 300 accumulates the plurality of partial products to obtain a final result.

In an implementation, the multiplicator input end 550 may include a storage circuit, for example, a register or a register group, configured to store the multiplicator data including the first multiplicator a0 and the second multiplicator a1. Correspondingly, the multiplicand input end 560 is configured to receive the first multiplicand b0 and the second multiplicand b1. In an implementation, the multiplicator input end 660 may include a storage circuit, for example, a register or a register group, configured to store the first multiplicand b0 and the second multiplicand b1.

In an implementation, positions where the first multiplicator a0 and the second multiplicator a1 are stored in the multiplicator input end 550 are the same as positions where the first multiplicand b0 and the second multiplicand b1 stored in the multiplicand input end 560. For example, the first multiplicator a0 and the second multiplicator a1 are respectively stored in an LSB to the 3^{rd} bit and 4^{th} to 7^{th} bits of the storage circuit of the multiplicator input end 550. The first multiplicand b0 and the second multiplicand b1 are respectively stored in an LSB to the 3^{rd} bit and 4^{th} to 7^{th} bits of the storage circuit of the multiplicand input end 560. In another implementation, a position where the first multiplicator a0 is stored in the multiplicator input end 550 is the same as a position where the second multiplicand b1 is stored in the multiplicand input end 560, and a position where the second multiplicator a1 is stored in the multiplicator input end 550 is the same as a position where the first multiplicand b0 is stored in the multiplicand input end 560. For example, the first multiplicator a0 and the second multiplicator a1 are respectively stored in an LSB to the 3^{rd} bit and 4^{th} to 7^{th} bits of the storage circuit of the multiplicator input end 550. The first multiplicand b0 and the second multiplicand b1 are respectively stored in 4^{th} to 7^{th} bits and an LSB to the 3^{rd} bit of the storage circuit of the multiplicand input end 560. The LSB, the 1^{st} bit, and the like all refer to data in bits before the extension.

The mask circuit 540 may include two masks, configured to respectively mask the first multiplicator a0 and mask the second multiplicator a1 in the multiplicator data of the multiplicator input end 550 by using AND gates, to respectively output the first mask result and the second mask result. In an implementation, the mask circuit 540 may include more than two masks. It is easy to understand that a quantity of masks in the mask circuit 540 is the same as a quantity of multiplicators in the multiplicator data.

The encoder 510 may include a plurality of sub-encoders, configured to perform Booth encoding on the data in the multiplicand input end 560. The encoding process includes Booth encoding on the first multiplicand b0 and the second multiplicand b1, and Booth encoding on another bit in the storage circuit in the multiplicand input end 560.

In an implementation, the multiplicand input end 560 is further configured to: store the first multiplicand b0 in lower bits of the storage circuit of the multiplicand input end 560, and store the second multiplicand b1 in higher bits; insert one extended bit of 0 at an end of a least significant bit of the first multiplicand b0; and set other idle bits than the first multiplicand b0, the second multiplicand b1, and the foregoing extended bit to 0.

For example, a bit width of the storage circuit of the multiplicand input end 560 is 12 bits, where the first multiplicand b0 is stored in an LSB to the 3^{rd} bit and the second multiplicand b1 is stored in the 8^{th} to 11^{th} bits. The multiplicand input end 560 is further configured to insert one extension bit of 0 at the end of the least significant bit of the first multiplicand b0, and set idle bits, namely, the 4^{th} to 7^{th}, to 0.

Similarly, the multiplicator input end 550 is further configured to store the first multiplicator a0 in low bits of the storage circuit of the multiplicator input end 550, and store the second multiplicator a1 in high bits; and set other idle bits than the first multiplicator a0 and the second multiplicator a1 to 0.

In an implementation, the multiplicand input end 560 is further configured to store the first multiplicand b0 in low bits of the storage circuit of the multiplicand input end 560, and store the second multiplicand b1 in high bits of the multiplicand input end 560. In addition, the first multiplicand b0 and the second multiplicand b1 are separated by at least one bit of 0.

A first sub-encoder in the plurality of sub-encoders in the encoder 510 is configured to perform Booth encoding on data from an extended bit to the (k - 2)^{th} bit of the multiplicand input end 560. The i^{th} sub-coder is configured to perform Booth encoding on data from the (i x (k - 1) + 1)^{th} bit to the ((i + 1) x (k - 1) + 1)^{th} bit of the multiplicand input end 560, where k is a bit width of each sub-coder, k ≥ 2 and is an integer, and i ≥ 1 and is an integer.

For example, the first sub-encoder performs Booth encoding on the extended bit, the LSB, and the 1^{st} bit of the multiplicand input end 560. The second sub-encoder performs Booth encoding on the 1^{st} to 3^{rd} bits of the multiplicand input end 560. The third sub-encoder performs Booth encoding on the 3^{rd} to 5^{th} bits of the multiplicand input end 560, and so on.

When the bit width of the storage circuit of the multiplicand input end 560 is 12 bits, the first multiplicand b0 is stored in the LSB to the 3^{rd} bit, and the second multiplicand b1 is stored in the 8^{th} to 11^{th} bits, encoding results of the first multiplicand b0 are encoding results of the first sub-encoder and the second sub-encoder, and encoding results of the second multiplicand b1 are encoding results of the 5^{th} sub-encoder and the 6^{th} sub-encoder.

When the encoder 510 performs encoding in a Radix-4 manner, k = 3, that is, a bit width of each sub-coder is three bits.

When the encoder 510 performs encoding in a Radix-8 manner, k = 4, that is, a bit width of each sub-coder is four bits.

When the encoder 510 performs encoding in a Radix-n manner, k = + 1, that is, a bit width of each sub-encoder is + 1 bit.

The partial product calculation circuit 520 includes a plurality of partial product sub-circuits, configured to respectively calculate, by using the plurality of encoding results obtained by a plurality of sub-encoders in the encoder 510 as control signals, a plurality of partial products based on two mask results respectively corresponding to the plurality of encoding results.

Specifically, the partial product calculation circuit 520 may include a plurality of first partial product sub-circuits and a plurality of second partial product sub-circuits. The first partial product sub-circuit is configured to respectively calculate a plurality of first partial products based on the first mask result by using a plurality of encoding results of the first multiplicand b0 as control signals.

The second partial product sub-circuit is configured to respectively calculate a plurality of second partial products based on the second mask result by using a plurality of encoding results of the second multiplicand b1 as control signals.

In an implementation, the partial product calculation circuit 520 further includes a plurality of third partial product sub-circuits, configured to respectively calculate a plurality of third partial products based on data in the multiplicator input end by using idle bits as control signals.

For example, for the first partial product sub-circuit or the second partial product sub-circuit, if a received encoding result is -2X, the control signal indicates that a relationship between a partial product corresponding to the encoding result and the mask result is -2 times. Therefore, a calculated partial product is the product of -2 and the mask result.

For the third partial product sub-circuit, if an encoding result received by the third partial product sub-circuit is X, the control signal indicates that a relationship between a partial product corresponding to the encoding result and data stored in the multiplicator input end 550 is 1 times. Therefore, a calculated partial product is the product of 1 and the data stored in the multiplicator input end 550.

The accumulator 530 is configured to separately accumulate the plurality of first partial products, the plurality of second partial products, and the third partial product.

In an implementation, the multiplier 600 further includes a selector 670, an adder 680, and a switch 690. The selector 670 is configured to output data of a most significant bit of the first multiplicand b0 to a most significant bit of a corresponding sub-encoder, and output data 0 to a least significant bit of a sub-encoder that is adjacent to the sub-encoder and that encodes an idle bit. The idle bit is a bit set to 0 between the first multiplicand b0 and the second multiplicand b1. Specifically, the selector 670 is configured to output the data of the most significant bit of the first multiplicand b0 to a most significant bit of an x^{th} sub-encoder, and output 0 to a least significant bit of an (x + 1)^{th} sub-encoder. The x^{th} sub-encoder is a sub-encoder that encodes the most significant bit *MSB*₂ to an (*MSB*₂ - k + 1)^{th} bit of the first multiplicand b0. The adder 680 is configured to add a result of accumulating the plurality of first partial products (that is, a result of multiplying the first multiplicator and the first multiplicand) and a result of accumulating the plurality of second partial products (that is, a result of multiplying the second multiplicator and the second multiplicand), to obtain a multiplication and accumulation result a0 x a1 + b0 x b1.

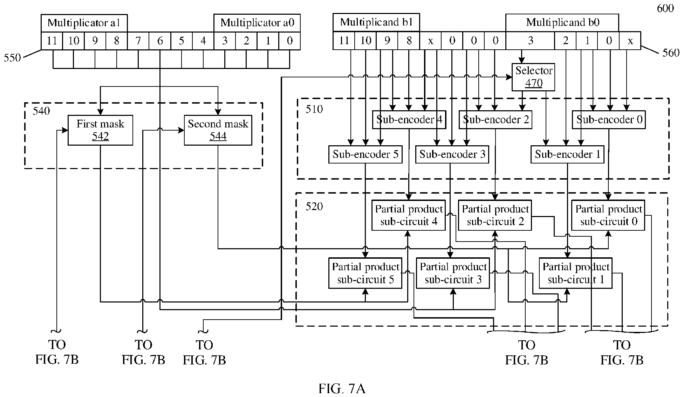

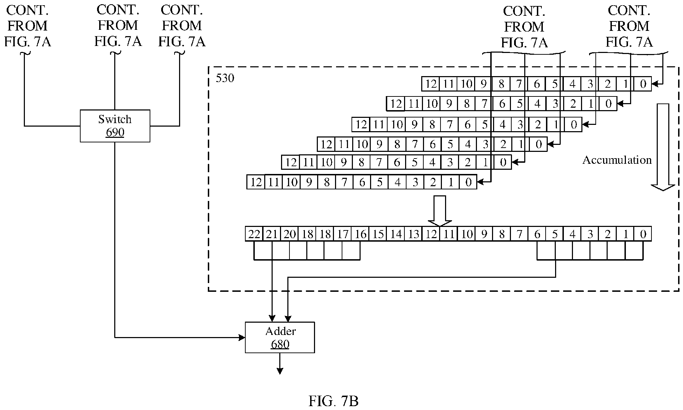

A working principle of the multiplier 600 is described by using a more specific multiplier 600 shown in FIG. 7A and FIG. 7B. The multiplier 600 is described by using a bit width of 12 bits as an example. However, it is easy to understand that, in the embodiments of this application, a bit width of the multiplier 600 is not limited. The multiplier 600 may be configured to perform operations of at least two groups of low bit width multiplication data, for example, calculate a sum a0 x b0 + a1 x b1 of products of four pieces of INT4 data shown in FIG. 7A and FIG. 7B: a first multiplicator a0, a second multiplicator a1, a first multiplicand b0, and a second multiplicand b1. It is easy to understand that, the multiplier 600 may further perform more than two groups of low bit width multiplication operations, and a quantity of multiplication operations is not limited in this application.

Using FIG. 7A and FIG. 7B as an example, the first multiplicator a0, the second multiplicator a1, the first multiplicand b0, and the second multiplicand b1 all have a bit width of four bits and are integers. The multiplicand input end 560 inserts one bit of 0 at an end of a least significant bit of the first multiplicand b0. After the end is extended, the first multiplicator a0, the second multiplicator a1, the first multiplicand b0, and the second multiplicand b1 are stored in a format shown in FIG. 7A and FIG. 7B. That is, the first multiplicator a0 corresponds to an LSB to a 3^{rd} bit of the multiplicator input end 550, and the second multiplicator a1 corresponds to 8^{th} to 11^{th} bits of the multiplicator input end 550. The first multiplicand b0 corresponds to an LSB to a 3^{rd} bit of the multiplicand input end 560, and the second multiplicand b1 corresponds to 8^{th} to 11^{th} bits of the multiplicand input end 560. The selector 670 outputs a most significant bit of the first multiplicand b0 to a sub-encoder 1, and outputs 0 to a least significant bit of a sub-encoder 2.

The encoder 510 includes a sub-encoder 0 (that is, the first sub-encoder, where the subsequent is deduced from this), the sub-encoder 1, the sub-encoder 2, a sub-encoder 3, a sub-encoder 4, and a sub-encoder 5. Specifically, the sub-encoder 0 encodes the extended bit of 0 inserted at the end of the first multiplicand b0, an LSB, and a 1^{st} bit; the sub-encoder 1 encodes the 1^{st} bit, a 2^{nd} bit, and a 3^{rd} bit; the sub-encoder 2 encodes the 3^{rd} bit, a 4^{th} bit, and a 5^{th} bit; and so on, as shown in FIG. 7A and FIG. 7B. An encoding manner of the sub-encoder may follow the rule in Table 1.

The multiplicator input end 550 receives and stores the first multiplicator a0 and the second multiplicator a1 in the same manner, that is, an LSB to a 3^{rd} bit of the multiplicator input end 550 receive and store the first multiplicator a0, and 8^{th} to 11^{th} bits receive and store the second multiplicator a1. It should be noted that in the multiplicand input end shown in FIG. 7A and FIG. 7B, x represents a fixed value 0.

The mask circuit 540 further includes a first mask 342 and a second mask 344. The first mask 342 is configured to zero a less significant bit part of the data stored in the multiplicator input end 550, that is, retain the second multiplicator a1 and zero the first multiplicator a0. Specifically, the first mask 342 may be an AND gate for implementing AND 0xF00 logic, so that a bitwise AND operation is performed on the 12-bit data stored in the multiplicator input end 550 and 0xF00, to retain data of the 8^{th} to 11^{th} bits, and zero data of the LSB to a 7^{th} bit. Correspondingly, the second mask 344 is configured to zero a more significant bit part of the data stored in the multiplicator input end 550, that is, retain the first multiplicator a0 and zero the second multiplicator a1. Specifically, the second mask 342 may be an AND gate for implementing AND 0x00F logic, so that a bitwise AND operation is performed on the 12-bit data stored in the multiplicator input end 550 and 0x00F, to retain data of the LSB to the 3^{rd} bit, and zero data of 4^{th} to 11^{th} bits.

The partial product calculation circuit 520 includes a partial product sub-circuit 0, a partial product sub-circuit 1, a partial product sub-circuit 2, a partial product sub-circuit 3, a partial product sub-circuit 4, and a partial product sub-circuit 5 shown in FIG. 7A and FIG. 7B. Each partial product sub-circuit receives an encoding result generated by a corresponding sub-encoder in the encoder 510, and outputs a corresponding partial product based on a received mask result generated by the first mask 342 or the second mask 344. The partial product sub-circuit 0 and the partial product sub-circuit 1 respectively determine, by using the sub-encoder 0 and the sub-encoder 1 as control signals, partial products based on the mask result generated by the second mask 344. The partial product sub-circuit 4 and the partial product sub-circuit 5 respectively determine, by using the sub-encoder 4 and the sub-encoder 5 as control signals, partial products based on the mask result generated by the first mask 342. The partial product sub-circuit 2 and the partial product sub-circuit 3 respectively determine, by using the sub-encoder 2 and the sub-encoder 3 as control signals, partial products based on data stored in the multiplicator input end 550. For example, if the encoding result generated by the sub-encoder 0 is -2X, and the mask result generated by the second mask 560 is 0x00C, the partial product sub-circuit 0 uses a control signal corresponding to the encoding result and the mask result 0x00C as an input, and outputs a product of the mask result and the control signal as a partial product. The partial product may be expressed as -2(0x00C)=0xFE8.

The accumulator 530 is configured to receive and accumulate a plurality of partial products generated by the partial product sub-circuits in the partial product calculation circuit 520. For example, the partial product generated by the partial product sub-circuit 0 is pp0, the partial product generated by the partial product sub-circuit 1 is pp1, the partial product generated by the partial product sub-circuit 2 is pp2, the partial product generated by the partial product sub-circuit 3 is pp3, the partial product generated by the partial product sub-circuit 4 is pp4, and the partial product generated by the partial product sub-circuit 5 is pp5. Because the multiplicand is encoded at an interval of two bits, corresponding weights of every two adjacent partial product sub-circuits are in a fourfold relationship. That is, the partial product generated by the partial product sub-circuit 0 is accumulated as 2⁰(pp0), the partial product generated by the partial product sub-circuit 1 is accumulated as 2²(pp1), the partial product generated by the partial product sub-circuit 2 is accumulated as 2⁴(pp2), the partial product generated by the partial product sub-circuit 3 is accumulated as 2⁶(pp3), the partial product generated by the partial product sub-circuit 4 is accumulated as 2⁸(pp4), and the partial product generated by the partial product sub-circuit 5 is accumulated as 2¹⁰(pp5). A final accumulation result is a final result obtained by multiplying the multiplicator and the multiplicand. The accumulation process may be expressed as: ${2}^{2} \left({2}^{2}\left({2}^{2}\left({2}^{2}\left({2}^{2}pp5+pp4\right)+pp3\right)+pp2\right)+pp1\right) + pp 0$

The accumulation result obtained in the accumulation process has a bit width of 23 bits. 16^{th} to 22^{nd} bits of the accumulation result store a result of a1 x b1, and an LSB to a 6^{th} bit store a result of a0 x b0.

The adder 680 is configured to receive the accumulation result generated by the accumulator, and add data in the 16^{th} to 22^{nd} bits and the LSB to the 6^{th} bit in the accumulation result, to obtain a result a0 x b0 + a1 x b1, and output the result.

In an implementation, the multiplier 600 further includes a switch 690, configured to activate the mask circuit 540, the selector 670, and the adder 680 based on a mode control signal. When activated, the mask circuit 540, the selector 670, and the adder 680 respectively perform functions described above. When the mask circuit 540, the selector 670, and the adder 680 are not activated (disabled), the mask circuit 540 is configured to directly transmit a received multiplicator, the selector 670 is configured to output the most significant bit of the first multiplicand b0 to the most significant bit of the sub-encoder 1 and the least significant bit of the sub-encoder 2, and the adder 680 is configured to directly transmit a received accumulation result. Specifically, when the mode control signal received by the switch 690 is a low bit width multiplication mode, the mask circuit 540, the selector 670, and the adder 680 are activated to respectively implement the functions shown in FIG. 7A and FIG. 7B. In this case, the multiplier 500 is configured to implement operations of at least two groups of low bit width multiplication data. When the mode control signal received by the switch 380 is a high bit width multiplication mode, the mask circuit 540, the selector 670, and the adder 680 are deactivated. In this case, the multiplier 500 is configured to perform an operation of one group of high bit width multiplication data.

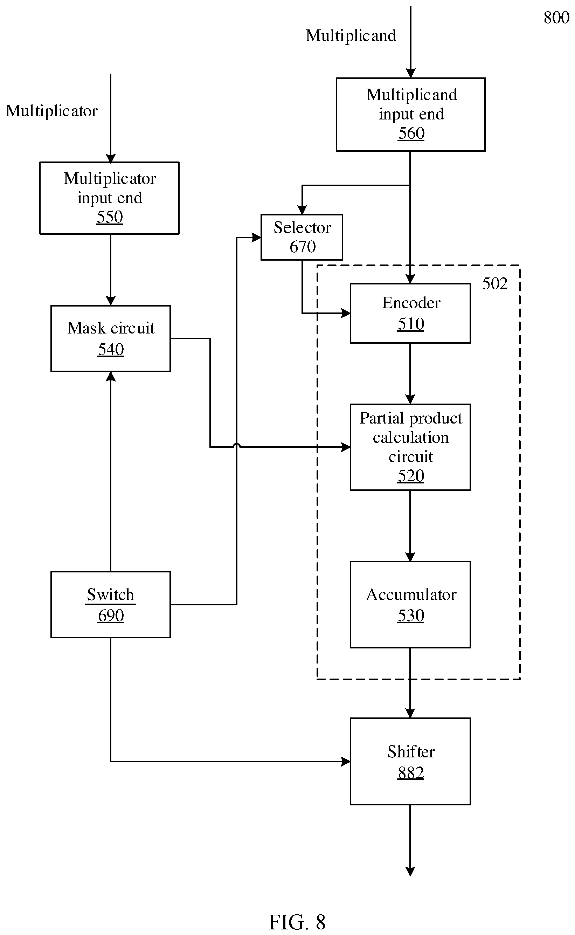

FIG. 8 shows another specific multiplier 800 according to an embodiment of this application. The multiplier 800 is similar to the multiplier 600 and includes the multiplication operation circuit 502, a mask circuit 540, a multiplicator input end 550, the multiplicand input end 560, the selector 670, and the switch 690. The multiplication operation circuit 502 includes the encoder 510, the partial product calculation circuit 520, and the accumulator 530. Differently, when the multiplicands are processed, the multiplicand input end 560 of the multiplier 800 is configured to store the first multiplicand b0 at less significant bits of the storage circuit of the multiplicand input end 560, store the second multiplicand b1 at more significant bits, and make the most significant bit of the first multiplicand b0 adjacent to the most significant bit of the second multiplicand b1. In an implementation, that multiplicator input end 550 is further configured to store the first multiplicator a0 at more significant bits of the multiplicator input end 550, store the second multiplicator a1 at less significant bits of the multiplicator input end 550, and make a least significant bit of the first multiplicator a0 adjacent to a most significant bit of the second multiplicator a1. A position where the first multiplicator a0 is stored in the multiplicator input end 550 is the same as a position where the second multiplicand b1 is stored in the multiplicand input end 560, and a position where the second multiplicator a1 is stored in the multiplicator input end 550 is the same as a position where the first multiplicand b0 is stored in the multiplicand input end 560.

The selector 680 in the multiplier 800 is configured to output data of the most significant bit of the first multiplicand b0 to a corresponding sub-encoder, and output data 0 to a sub-encoder that is adjacent to the sub-encoder and that encodes the second multiplicand b1. Specifically, the selector 680 is configured to output 0 to a most significant bit of an x^{th} sub-encoder, and output data of the least significant bit of the second multiplicand b1 to a least significant bit of the (x + 1)^{th} sub-encoder. The x^{th} sub-encoder is a sub-encoder that encodes the most significant bit *MSB*₁ to an (*MSB*₁ - k + 1)^{th} bit of the first multiplicand b0, and the (x + 1)^{th} sub-encoder is a sub-encoder that encodes the least significant bit *LSB*₂ to an (*LSB*₂ - k + 1)^{th} bit of the second multiplicand b1. In addition, the multiplier 800 further includes a shifter (shifter) 882, configured to shift the result of accumulating the plurality of first partial products (that is, the result of multiplying the first multiplicator and the first multiplicand) and the result of accumulating the plurality of second partial products (that is, the result of multiplying the second multiplicator and the second multiplicand). Specifically, a bit quantity of the shift is a bit width of the multiplicator or the multiplicand.

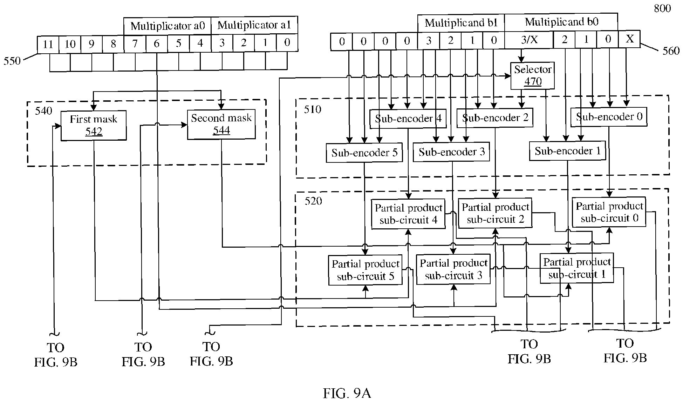

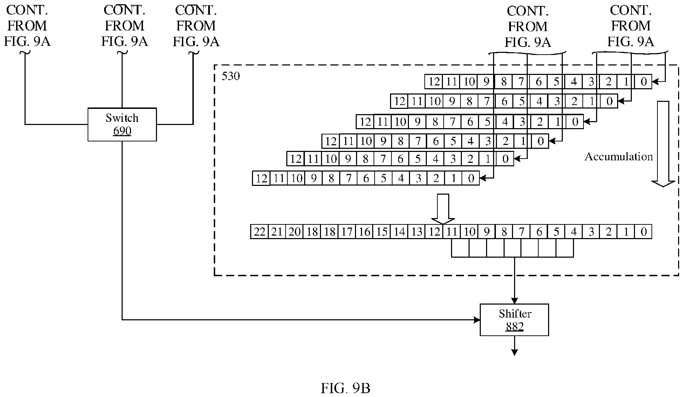

A working principle of the multiplier 800 is described by using another more specific multiplier 800 shown in FIG. 9A and FIG. 9B. The multiplicand input end 560 extends the end of the first multiplicand b0, that is, inserts one bit of 0 at the end of the least significant bit of the first multiplicand b0. After the end is extended, the first multiplicator a0, the second multiplicator a1, the first multiplicand b0, and the second multiplicand b1 are stored in a format shown in FIG. 7A and FIG. 7B. That is, the first multiplicator a0 corresponds to 4^{th} to 7^{th} bits of the multiplicator input end 550, and the second multiplicator a1 corresponds to the LSB to the 3^{rd} bit of the multiplicator input end 550. The first multiplicand b0 corresponds to the LSB to the 3^{rd} bit of the multiplicand input end 560, and the second multiplicand b1 corresponds to 4^{th} to 7^{th} bits of the multiplicand input end 560. The selector 670 outputs 0 to the sub-encoder 1, and outputs the least significant bit of the second multiplicand b0 to the sub-encoder 2. It should be noted that in the multiplicand input end shown in FIG. 9A and FIG. 9B, x represents a fixed value 0. The shifter 882 is configured to shift the result obtained by the accumulator 530 to the right by four bits, to obtain the result a0 x b0 + a1 x b1, and output the result.

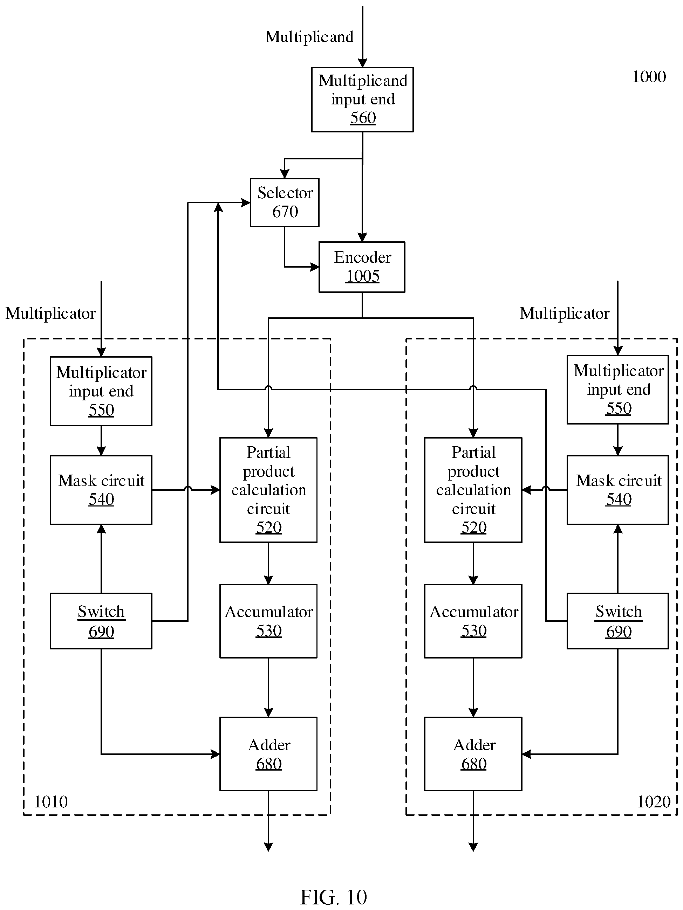

An embodiment of this application further provides a data processing system, including an encoder and at least one multiplier that shares the encoder. A data processing system 1000 shown in FIG. 10 is used as an example for description. The data processing system 1000 includes an encoder 1005, a multiplier 1010, and a multiplier 1020. The multiplier 1010 and the multiplier 1020 each may include the mask circuit 540, the multiplicator input end 550, the multiplicand input end 560, the switch 790, the partial product calculation circuit 520, and the accumulator 540 that are provided in any embodiment of this application. The encoder 1050 may be the encoder 510 provided in the embodiments of this application. Differently, an encoding result of the encoder 1005 is shared by the multiplier 1010 and the multiplier 1020. That is, the encoder 1005 encodes input multiplicands (for example, a first multiplicand b0 and a second multiplicand b1), and output a plurality of obtained encoding results to the partial product calculation circuit 520 of the multiplier 1010 and the partial product calculation circuit 520 of the multiplier 1020. In an implementation, each multiplier may further include the adder 680 provided in the embodiments of this application. In an implementation, each multiplier may further include the shifter 882 provided in the embodiments of this application. In an implementation, the data processing system 1000 further includes the selector 670 provided in the embodiments of this application. It should be noted that the selector 670 is activated when the switches in the multiplier 1010 and the multiplier 1020 are enabled.

In a possible implementation, the data processing system 1000 may further include a plurality of multipliers, and the plurality of multipliers each may include the mask circuit 540, the partial product calculation circuit 520, the accumulator 540, the multiplicator input end 550, the multiplicand input end 560, the switch 690, the selector 670, and the adder 680 or the shifter 882 that are provided in the embodiments of this application.

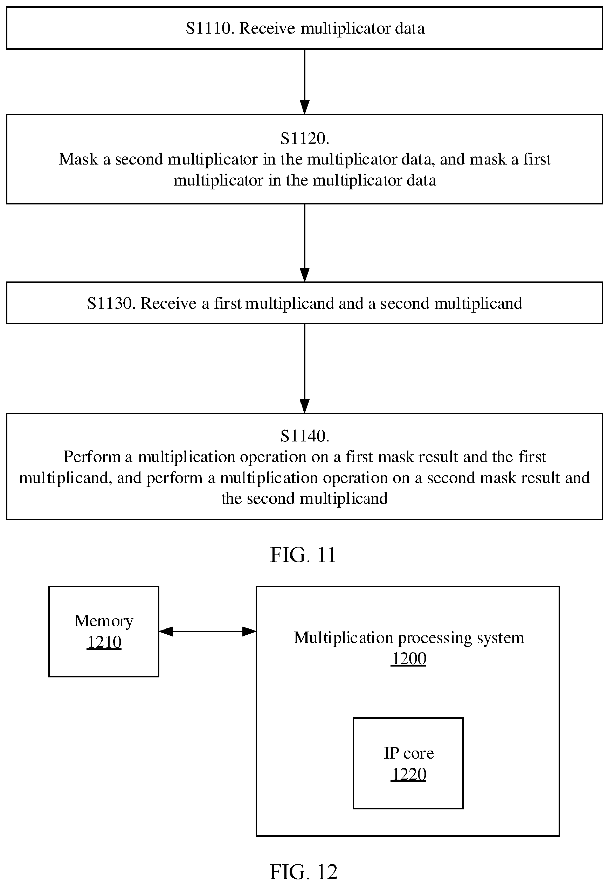

FIG. 11 shows a multiplication calculation method according to an embodiment of this application, applied to a multiplier. The multiplier includes a multiplicator input end and a multiplicand input end, and the multiplication calculation method includes the following steps:
S1110. Receive multiplicator data, where the multiplicator data includes a first multiplicator and a second multiplicator, and a sum of a bit width of the first multiplicator and a bit width of the second multiplicator is less than a bit width of the multiplicator data.

S1120. Mask the second multiplicator in the multiplicator data to obtain a first mask result, and mask the first multiplicator in the multiplicator data to obtain a second mask result.

S1130. Receive a first multiplicand and a second multiplicand, where a sum of a bit width of the first multiplicand and a bit width of the second multiplicand is less than a bit width of the multiplicand input end.

S1140. Perform a multiplication operation on the first mask result and the first multiplicand to obtain a result of multiplying the first multiplicator and the first multiplicand, and perform a multiplication operation on the second mask result and the second multiplicand to obtain a result of multiplying the second multiplicator and the second multiplicand.

In an implementation, the step of performing a multiplication operation on the first mask result and the first multiplicand to obtain a result of multiplying the first multiplicator and the first multiplicand, and performing a multiplication operation on the second mask result and the second multiplicand to obtain a result of multiplying the second multiplicator and the second multiplicand includes: performing Booth encoding on the first multiplicand and the second multiplicand.

In an implementation, the step of performing a multiplication operation on the first mask result and the first multiplicand to obtain a result of multiplying the first multiplicator and the first multiplicand, and performing a multiplication operation on the second mask result and the second multiplicand to obtain a result of multiplying the second multiplicator and the second multiplicand further includes: performing partial product calculation based on encoding results generated by the Booth encoding, to obtain a plurality of partial products; and accumulating the plurality of partial products.

In an implementation, the step of performing Booth encoding on the first multiplicand and the second multiplicand includes: performing, by using a plurality of sub-encoders, Booth encoding on the first multiplicand to obtain at least one first encoding result, and Booth encoding on the second multiplicand to obtain at least one second encoding result. The step of performing partial product calculation based on encoding results generated by the Booth encoding, to obtain a plurality of partial products includes: calculating at least one first partial product of the at least one first encoding result and the first mask result, and calculating at least one second partial product of the at least one second encoding result and the second mask result. The step of accumulating the plurality of partial products includes: performing accumulation on the at least one first partial product to obtain the result of multiplying the first multiplicator and the first multiplicand, and performing accumulation on the at least one second partial product to obtain the result of multiplying the second multiplicator and the second multiplicand.

In an implementation, the multiplication calculation method further includes: adding the result, obtained by the accumulator, of multiplying the first multiplicator and the first multiplicand and the result, obtained by the accumulator, of multiplying the second multiplicator and the second multiplicand.

In an implementation, the multiplication calculation method further includes: shifting the result, obtained by the accumulator, of multiplying the first multiplicator and the first multiplicand and the result, obtained by the accumulator, of multiplying the second multiplicator and the second multiplicand.

In an implementation, data in the multiplicand input end includes the first multiplicand located at a less significant bit of the multiplicand input end, the second multiplicand located at a more significant bit of the multiplicand input end, one extended bit of 0 inserted at an end of a least significant bit of the first multiplicand, and another bit set to 0 other than the first multiplicand, the second multiplicand, and the extended bit in the multiplicand input end. The multiplicator data includes: the first multiplicator located at a less significant bit of the multiplicator input end, the second multiplicator located at a more significant bit of the multiplicator input end, and another bit set to 0 other than the first multiplicator and the second multiplicator in the multiplicator input end. A position of the first multiplicator in the multiplicator input end is the same as a position of the first multiplicand in the multiplicand input end, and a position of the second multiplicator in the multiplicator input end is the same as a position of the second multiplicand in the multiplicand input end.

In an implementation, the first multiplicand and the second multiplicand are separated by at least one bit of 0, the first multiplicator and the second multiplicator are separated by at least one bit of 0, and the multiplication calculation method further includes: outputting data of a most significant bit of the first multiplicand to a most significant bit of a corresponding first sub-encoder, and outputting data 0 to a least significant bit of a sub-encoder that is adjacent to the first sub-encoder and that encodes an idle bit. The idle bit is a bit set to 0 between the first multiplicand and the second multiplicand.

In an implementation, a most significant bit of the first multiplicand is adjacent to a least significant bit of the second multiplicand, a most significant bit of the first multiplicator is adjacent to a least significant bit of the second multiplicator, and the multiplication calculation method further includes: outputting data of the most significant bit of the first multiplicand to a most significant bit of a corresponding first sub-encoder, and outputting data 0 to a least significant bit of a second sub-encoder. The second sub-encoder is a sub-encoder that is adjacent to the first sub-encoder and that encodes the second multiplicand.

In an implementation, the multiplication calculation method further includes: using a switch, where when the switch is in an on state, masking processing is performed; and when the switch is in an off state, masking processing is not performed.

In an implementation, the step of masking the second multiplicator in the multiplicator data to obtain a first mask result, and masking the first multiplicator in the multiplicator data to obtain a second mask result includes: using two AND gates, to respectively mask the first multiplicator and mask the second multiplicator in the multiplicator data to output the two mask results.

FIG. 12 shows a multiplication processing system 1200 according to an embodiment of this application is shown. The multiplication processing system 1200 may be coupled to a memory 1210, and read data from the memory 1210 or write data to the memory. The multiplication processing system 1200 may be implemented by a central processing unit (Central Processing Unit, CPU), or may be implemented by an application specific integrated circuit (Application Specific Integrated Circuit, ASIC) or a field programmable gate array (Field Programmable Gate Array, FPGA). The memory 1210 may be a random access memory (random access memory, RAM), a read only memory (read only memory, ROM), or another type of memory. The multiplication processing system 1200 and the memory 1210 may be disposed on a substrate and packaged in a semiconductor package structure, or may be separately packaged in different semiconductor package structures. The data may be data on which a multiplication operation is to be performed, for example, multiplicand data, multiplicator data, or control signals and parameters related to the multiplication operation, or may be a result of the multiplication operation or an intermediate result. The multiplication processing system 1200 may include an IP core (intellectual property core, intellectual property core) 1220. The IP core 1220 may be configured to implement any method provided in the embodiments of this application. Alternatively, the IP core 1220 may include any multiplier or data processing system provided in the embodiments of this application.

In an implementation, the IP core 1220 may be implemented by using a DSP (Digital Signal Processor, digital signal processor) or a CPU, for example, by using a soft core. In an implementation, the IP core 1220 may alternatively be implemented by using a hard core. In another implementation, the IP core 1220 may be implemented by running a firm core on a DSP/CPU. For example, the multiplication processing system 1200 reads a configuration file (firm core) from a computer-readable storage medium, where the configuration file is used to configure the multiplication processing system 1200, so that the multiplication processing system 1200 can be configured as any multiplier or data processing system provided in the embodiments of this application, or configured to implement any method provided in the embodiments of this application. The configuration file is a functionally verified circuit structure encoding file.

In an implementation, an embodiment of this application provides a computer-readable storage medium that stores a computer program. When the computer program is executed by a processor, any method provided in the embodiments of this application is implemented.

In an implementation, an embodiment of this application provides a computer program. The computer program includes instructions. When the computer program is executed by a computer, the computer is enabled to perform any method provided in the embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multiplier (500), wherein the multiplier (500) comprises:
a multiplicator input end (550), configured to receive multiplicator data, wherein the multiplicator data comprises a first multiplicator (a0) and a second multiplicator (a1), and a sum of a bit width of the first multiplicator (a0) and a bit width of the second multiplicator (a1) is less than a bit width of the multiplicator input end (550), wherein the multiplicator input end (550) is further configured to store the first multiplicator (a0) in low bits of a storage circuit of the multiplicator input end (550) and the second multiplicator (a1) in high bits of the storage circuit of the multiplicator input end (550) and to set other idle bits than the first multiplicator (a0) and the second multiplicator (a1) to 0;
a mask circuit (540) including a first mask (342) and a second mask (344), the first mask (342) being configured to mask the second multiplicator (a1) in the multiplicator data to obtain a first mask result, and the second mask (344) being configured to mask the first multiplicator (a0) in the multiplicator data to obtain a second mask result;
a multiplicand input end (560), configured to receive a first multiplicand (b0) and a second multiplicand (b1), wherein a sum of a bit width of the first multiplicand (b0) and a bit width of the second multiplicand (b1) is less than a bit width of the multiplicand input end (560), wherein positions where the first multiplicator (a0) and the second multiplicator (a1) are stored in the multiplicator input end (550) are the same as positions where the first multiplicand (b0) and the second multiplicand (b1) stored in the multiplicand input end (560), or a position where the first multiplicator (a0) is stored in the multiplicator input end (550) is the same as a position where the second multiplicand (b1) is stored in the multiplicand input end (560), and a position where the second multiplicator (a1) is stored in the multiplicator input end (550) is the same as a position where the first multiplicand (b0) is stored in the multiplicand input end (560); and
a multiplication operation circuit (502), configured to perform a multiplication operation on the first mask result and the first multiplicand (b0) to obtain a result of multiplying the first multiplicator (a0) and the first multiplicand, and perform a multiplication operation on the second mask result and the second multiplicand (b1) to obtain a result of multiplying the second multiplicator (a1) and the second multiplicand (b1).

2. The multiplier (500) according to claim 1, wherein the multiplication operation circuit (502) comprises a Booth encoder.

3. The multiplier (500) according to claim 2, wherein the multiplication operation circuit (502) further comprises:
a partial product calculation circuit, configured to perform a partial product calculation based on an encoding result generated by the Booth encoder; and
an accumulator, configured to accumulate a plurality of partial products generated by the partial product calculation circuit.

4. The multiplier (500) according to claim 3, wherein
the Booth encoder comprises a plurality of sub-encoders, configured to perform Booth encoding on the first multiplicand (b0) to obtain at least one first encoding result, and perform Booth encoding on the second multiplicand (b1) to obtain at least one second encoding result;
the partial product calculation circuit is specifically configured to calculate at least one first partial product of the at least one first encoding result and the first mask result, and calculate at least one second partial product of the at least one second encoding result and the second mask result; and
the accumulator is specifically configured to perform accumulation on the at least one first partial product to obtain the result of multiplying the first multiplicator (a0) and the first multiplicand, and perform accumulation on the at least one second partial product to obtain the result of multiplying the second multiplicator (a1) and the second multiplicand.

5. The multiplier (500) according to any one of claims 1 to 4, wherein the multiplier (500) further comprises an adder, and the adder is configured to:
add the result of multiplying the first multiplicator (a0) and the first multiplicand (b0) and the result of multiplying the second multiplicator (a1) and the second multiplicand.

6. The multiplier (500) according to any one of claims 1 to 4, wherein the multiplier (500) further comprises a shifter, and the shifter is configured to:
shift the result of multiplying the first multiplicator (a0) and the first multiplicand (b0) and the result of multiplying the second multiplicator (a1) and the second multiplicand.

7. The multiplier (500) according to any one of claims 4 to 6, wherein data in the multiplicand input end (560) comprises the first multiplicand (b0) located at a less significant bit of the multiplicand input end (560), the second multiplicand (b1) located at a more significant bit of the multiplicand input end (560), one extended bit of 0 inserted at an end of a least significant bit of the first multiplicand, and another bit set to 0 other than the first multiplicand, the second multiplicand, and the extended bit in the multiplicand input end (560); and
the multiplicator data comprises:
the first multiplicator (a0) located at the less significant bit of the multiplicator input end (550), the second multiplicator (a1) located at the more significant bit of the multiplicand input end (560), and another bit set to 0 other than the first multiplicator (a0) and the second multiplicator (a1) in the multiplicator input end (550), wherein a position of the first multiplicator (a0) in the multiplicator input end (550) is the same as a position of the first multiplicand (b0) in the multiplicand input end (560), and a position of the second multiplicator (a1) in the multiplicator input end (550) is the same as a position of the second multiplicand (b1) in the multiplicand input end (560).

8. The multiplier (500) according to claim 7, wherein the first multiplicand (b0) and the second multiplicand (b1) are separated by at least one bit of 0, the first multiplicator (a0) and the second multiplicator (a1) are separated by at least one bit of 0, and the multiplier (500) further comprises a selector, wherein the selector is configured to:
output data of a most significant bit of the first multiplicand (b0) to a most significant bit of a corresponding first sub-encoder, and output data 0 to a least significant bit of a sub-encoder that is adjacent to the first sub-encoder and that encodes an idle bit, wherein the idle bit is a bit set to 0 between the first multiplicand (b0) and the second multiplicand.

9. The multiplier (500) according to claim 7, wherein the most significant bit of the first multiplicand (b0) is adjacent to a least significant bit of the second multiplicand, a most significant bit of the first multiplicator (a0) is adjacent to a least significant bit of the second multiplicator, and the multiplicator further comprises a selector, wherein the selector is configured to:
output data of the most significant bit of the first multiplicand (b0) to a most significant bit of a corresponding first sub-encoder, and output data 0 to a least significant bit of a second sub-encoder, wherein the second sub-encoder is a sub-encoder that is adjacent to the first sub-encoder and that encodes the second multiplicand.

10. The multiplier (500) according to claim 4, wherein the partial product sub-circuit comprises a plurality of first partial product sub-circuits, a plurality of second product sub-circuits, and a plurality of third product sub-circuits, wherein
the plurality of first partial product sub-circuits are configured to respectively calculate a plurality of first partial products based on the first mask result by using a plurality of encoding results of the first multiplicand (b0) as control signals;
the plurality of second partial product sub-circuits are configured to respectively calculate a plurality of second partial products based on the second mask result by using a plurality of encoding results of the second multiplicand (b1) as control signals;
the plurality of third partial product sub-circuits are configured to respectively calculate a plurality of third partial products based on data in the multiplicator input end (550) by using idle bits as control signals, wherein the idle bits are bits set to 0 in the multiplicand input end (560); and
the accumulator is specifically configured to accumulate the plurality of first partial products, the plurality of second partial products, and the plurality of third partial products.

11. A multiplication calculation method, applied to a multiplier (500), wherein the multiplier (500) comprises a multiplicator input end (550) and a multiplicand input end (560), and the multiplication calculation method comprises:
receiving multiplicator data at the multiplicator input end (550), wherein the multiplicator data comprises a first multiplicator (a0) and a second multiplicator, and a sum of a bit width of the first multiplicator (a0) and a bit width of the second multiplicator (a1) is less than a bit width of the multiplicator input end (550), wherein the first multiplicator (a0) is stored in low bits of a storage circuit of the multiplicator input end (550), the second multiplicator (a1) is stored in high bits of the storage circuit of the multiplicator input end (550), and other idle bits than the first multiplicator (a0) and the second multiplicator (a1) are set to 0;
using a first mask to mask the second multiplicator (a1) in the multiplicator data to obtain a first mask result, and using a second mask to mask the first multiplicator (a0) in the multiplicator data to obtain a second mask result;
receiving a first multiplicand (b0) and a second multiplicand at the multiplicand input end (560), wherein a sum of a bit width of the first multiplicand (b0) (b0) and a bit width of the second multiplicand (b1) is less than a bit width of the multiplicand input end (560), wherein positions where the first multiplicator (a0) and the second multiplicator (a1) are stored in the multiplicator input end (550) are the same as positions where the first multiplicand (b0) and the second multiplicand (b1) stored in the multiplicand input end (560), or a position where the first multiplicator (a0) is stored in the multiplicator input end (550) is the same as a position where the second multiplicand (b1) is stored in the multiplicand input end (560), and a position where the second multiplicator (a1) is stored in the multiplicator input end (550) is the same as a position where the first multiplicand (b0) is stored in the multiplicand input end (560); and
performing a multiplication operation on the first mask result and the first multiplicand (b0) to obtain a result of multiplying the first multiplicator (a0) and the first multiplicand, and performing a multiplication operation on the second mask result and the second multiplicand (b1) to obtain a result of multiplying the second multiplicator (a1) and the second multiplicand.

12. The multiplication calculation method according to claim 11, wherein a step of performing a multiplication operation on the first mask result and the first multiplicand (b0) to obtain a result of multiplying the first multiplicator (a0) and the first multiplicand, and performing a multiplication operation on the second mask result and the second multiplicand (b1) to obtain a result of multiplying the second multiplicator (a1) and the second multiplicand (b1) comprises:
performing Booth encoding on the first multiplicand (b0) and the second multiplicand.

13. The multiplication calculation method according to claim 12, wherein the step of performing a multiplication operation on the first mask result and the first multiplicand (b0) to obtain a result of multiplying the first multiplicator (a0) and the first multiplicand, and performing a multiplication operation on the second mask result and the second multiplicand (b1) to obtain a result of multiplying the second multiplicator (a1) and the second multiplicand (b1) further comprises:
performing partial product calculation based on encoding results generated by the Booth encoding, to obtain a plurality of partial products; and accumulating the plurality of partial products.

14. A multiplication processing system, wherein the multiplication processing system reads a configuration file from a memory coupled to the multiplication processing system, so that the multiplication processing system may be configured as the multiplier (500) according to any one of claims 1 to 10.

15. A computer-readable storage medium, wherein the computer-readable storage medium stores a computer program; and when the computer program is executed by a processor, the method according to any one of claims 1 1 to 13 is implemented.

## Patentansprüche

1. Multiplizierer (500), wobei der Multiplizierer (500) umfasst:
ein Multiplikator-Eingangsende (550), das konfiguriert ist, um Multiplikatordaten zu empfangen, wobei die Multiplikatordaten einen ersten Multiplikator (a0) und einen zweiten Multiplikator (a1) umfassen und eine Summe aus einer Bitbreite des ersten Multiplikators (a0) und einer Bitbreite des zweiten Multiplikators (a1) kleiner als eine Bitbreite des Multiplikator-Eingangsendes (550) ist, wobei das Multiplikator-Eingangsende (550) ferner konfiguriert ist, um den ersten Multiplikator (a0) in niedrigen Bits einer Speicherungsschaltung des Multiplikator-Eingangsendes (550) und den zweiten Multiplikator (a1) in hohen Bits der Speicherschaltung des Multiplikator-Eingangsendes (550) zu speichern und andere Idle-Bits, die nicht zu dem ersten Multiplikator (a0) und zu dem zweiten Multiplikator (a1) gehören, auf 0 zu setzen;
eine Maskierungsschaltung (540), die eine erste Maske (342) und eine zweite Maske (344) umfasst, wobei die erste Maske (342) konfiguriert ist, um den zweiten Multiplikator (a1) in den Multiplikatordaten zu maskieren, um ein erstes Maskierungsergebnis zu erhalten, und die zweite Maske (344) konfiguriert ist, um den ersten Multiplikator (a0) in den Multiplikatordaten zu maskieren, um ein zweites Maskierungsergebnis zu erhalten;
ein Multiplikand-Eingangsende (560), das konfiguriert ist, um einen ersten Multiplikanden (b0) und einen zweiten Multiplikanden (b1) zu empfangen, wobei eine Summe aus einer Bitbreite des ersten Multiplikanden (b0) und einer Bitbreite des zweiten Multiplikanden (b1) kleiner als eine Bitbreite des Multiplikand-Eingangsendes (560) ist, wobei Positionen, an denen der erste Multiplikator (a0) und der zweite Multiplikator (a1) in dem Multiplikator-Eingangsende (550) gespeichert sind, die gleichen wie Positionen sind, an denen der erste Multiplikand (b0) und der zweite Multiplikand (b1) in dem Multiplikand-Eingangsende (560) gespeichert sind, oder eine Position, an der der erste Multiplikator (a0) in dem Multiplikator-Eingangsende (550) gespeichert ist, die gleiche wie eine Position ist, an der der zweite Multiplikand (b1) in dem Multiplikand-Eingangsende (560) gespeichert ist, und eine Position, an der der zweite Multiplikator (a1) in dem Multiplikator-Eingangsende (550) gespeichert ist, die gleiche wie eine Position ist, an der der erste Multiplikand (b0) im Multiplikand-Eingangsende (560) gespeichert ist; und
eine Multiplikationsoperationsschaltung (502), die konfiguriert ist, um eine Multiplikationsoperation an dem ersten Maskierungsergebnis und dem ersten Multiplikanden (b0) durchzuführen, um ein Ergebnis des Multiplizierens des ersten Multiplikators (a0) und des ersten Multiplikanden zu erhalten, und eine Multiplikationsoperation an dem zweiten Maskierungsergebnis und dem zweiten Multiplikanden (b1) durchzuführen, um ein Ergebnis des Multiplizierens des zweiten Multiplikators (a1) und des zweiten Multiplikanden (b1) zu erhalten.

2. Multiplizierer (500) nach Anspruch 1, wobei die Multiplikationsoperationsschaltung (502) einen Booth-Codierer umfasst.

3. Multiplizierer (500) nach Anspruch 2, wobei die Multiplikationsoperationsschaltung (502) ferner umfasst:
eine Teilprodukt-Berechnungsschaltung, die konfiguriert ist, um basierend auf einem durch den Booth-Codierer erzeugten Codierungsergebnis eine Teilproduktberechnung durchzuführen; und
einen Akkumulator, der konfiguriert ist, um eine Vielzahl von Teilprodukten zu akkumulieren, die durch die Teilprodukt-Berechnungsschaltung erzeugt werden.

4. Multiplizierer (500) nach Anspruch 3, wobei
der Booth-Codierer eine Vielzahl von Subcodierern umfasst, die konfiguriert sind, um eine Booth-Codierung an dem ersten Multiplikanden (b0) durchzuführen, um mindestens ein erstes Codierungsergebnis zu erhalten, und eine Booth-Codierung an dem zweiten Multiplikanden (b1) durchzuführen, um mindestens ein zweites Codierungsergebnis zu erhalten;
die Teilprodukt-Berechnungsschaltung speziell konfiguriert ist, um mindestens ein erstes Teilprodukt aus dem mindestens einen ersten Codierungsergebnis und dem ersten Maskierungsergebnisses zu berechnen und mindestens ein zweites Teilprodukt aus dem mindestens einen zweiten Codierungsergebnis und dem zweiten Maskierungsergebnis zu berechnen; und
der Akkumulator speziell konfiguriert ist, um eine Akkumulation an dem mindestens einen ersten Teilprodukt durchzuführen, um das Ergebnis des Multiplizierens des ersten Multiplikators (a0) und des ersten Multiplikanden zu erhalten, und eine Akkumulation an dem mindestens einen zweiten Teilprodukt durchzuführen, um das Ergebnis des Multiplizierens des zweiten Multiplikators (a1) und des zweiten Multiplikanden zu erhalten.

5. Multiplizierer (500) nach einem der Ansprüche 1 bis 4, wobei der Multiplizierer (500) ferner einen Addierer umfasst und der Addierer konfiguriert ist zum:
Addieren des Ergebnisses des Multiplizierens des ersten Multiplikators (a0) und des ersten Multiplikanden (b0) und des Ergebnisses des Multiplizierens des zweiten Multiplikators (a1) und des zweiten Multiplikanden.

6. Multiplizierer (500) nach einem der Ansprüche 1 bis 4, wobei der Multiplizierer (500) ferner einen Verschieber umfasst und der Verschieber konfiguriert ist zum:
Verschieben des Ergebnisses des Multiplizierens des ersten Multiplikators (a0) und des ersten Multiplikanden (b0) und des Ergebnisses des Multiplizierens des zweiten Multiplikators (a1) und des zweiten Multiplikanden.

7. Multiplizierer (500) nach einem der Ansprüche 4 bis 6, wobei Daten in dem Multiplikanden-Eingangsende (560) den ersten Multiplikanden (b0), der sich an einem niederwertigeren Bit des Multiplikanden-Eingangsendes (560) befindet, den zweiten Multiplikanden (b1), der sich an einem höherwertigeren Bit des Multiplikanden-Eingangsendes (560) befindet, ein erweitertes 0-Bit, das an einem Ende eines niederwertigsten Bits des ersten Multiplikanden eingefügt ist, und ein weiteres Bit, das auf 0 gesetzt ist und sich von dem ersten Multiplikanden, dem zweiten Multiplikanden und dem erweiterten Bit in dem Multiplikanden-Eingangsende (560) unterscheidet, umfassen; und
die Multiplikatordaten umfassen:
den ersten Multiplikator (a0), der sich an dem niederwertigeren Bit des Multiplikator-Eingangsendes (550) befindet, den zweiten Multiplikator (a1), der sich an dem höherwertigeren Bit des Multiplikanden-Eingangsendes (560) befindet, und ein weiteres Bit, das auf 0 gesetzt ist und sich von dem ersten Multiplikator (a0) und dem zweiten Multiplikator (a1) in dem Multiplikator-Eingangsende (550) unterscheidet, wobei eine Position des ersten Multiplikators (a0) in dem Multiplikator-Eingangsende (550) die gleiche ist wie eine Position des ersten Multiplikanden (b0) in dem Multiplikanden-Eingangsende (560), und eine Position des zweiten Multiplikators (a1) in dem Multiplikator-Eingangsende (550) die gleiche ist wie eine Position des zweiten Multiplikanden (b1) in dem Multiplikanden-Eingangsende (560).

8. Multiplizierer (500) nach Anspruch 7, wobei der erste Multiplikand (b0) und der zweite Multiplikand (b1) durch mindestens ein 0-Bit getrennt sind, der erste Multiplikator (a0) und der zweite Multiplikator (a1) durch mindestens ein 0-Bit getrennt sind, und der Multiplizierer (500) ferner einen Selektor umfasst, wobei der Selektor konfiguriert ist zum: Ausgeben von Daten eines höchstwertigen Bits des ersten Multiplikanden (b0) an ein höchstwertiges Bit eines entsprechenden ersten Subcodierers, und Ausgeben von Daten 0 an ein niederwertigstes Bit eines Subcodierers, der dem ersten Subcodierer benachbart ist und der ein Idle-Bit codiert, wobei das Idle-Bit ein auf 0 gesetztes Bit zwischen dem ersten Multiplikanden (b0) und dem zweiten Multiplikanden ist.

9. Multiplizierer (500) nach Anspruch 7, wobei das höchstwertige Bit des ersten Multiplikanden (b0) benachbart zu einem niederwertigsten Bit des zweiten Multiplikanden ist, ein höchstwertiges Bit des ersten Multiplikators (a0) benachbart zu einem niederwertigsten Bit des zweiten Multiplikators ist, und der Multiplikator ferner einen Selektor umfasst, wobei der Selektor konfiguriert ist zum:
Ausgeben von Daten des höchstwertigen Bits des ersten Multiplikanden (b0) an ein höchstwertiges Bit eines entsprechenden ersten Subcodierers, und Ausgeben von Daten 0 an ein niederwertigstes Bit eines zweiten Subcodierers, wobei der zweite Subcodierer ein Subcodierer ist, der dem ersten Subcodierer benachbart ist und der den zweiten Multiplikanden codiert.

10. Multiplizierer (500) nach Anspruch 4, wobei die Teilprodukt-Subschaltung eine Vielzahl von ersten Teilprodukt-Subschaltungen, eine Vielzahl von zweiten Produkt-Subschaltungen und eine Vielzahl von dritten Produkt-Subschaltungen umfasst, wobei die Vielzahl von ersten Teilprodukt-Subschaltungen konfiguriert ist, um jeweils eine Vielzahl von ersten Teilprodukten basierend auf dem ersten Maskierungsergebnis zu berechnen, indem sie eine Vielzahl von Codierungsergebnissen des ersten Multiplikanden (b0) als Steuersignale verwendet;
die Vielzahl von zweiten Teilprodukt-Subschaltungen konfiguriert ist, um jeweils eine Vielzahl von zweiten Teilprodukten basierend auf dem zweiten Maskierungsergebnis zu berechnen, indem sie eine Vielzahl von Codierungsergebnissen des zweiten Multiplikanden (b1) als Steuersignale verwendet;
die Vielzahl von dritten Teilprodukt-Subschaltungen konfiguriert ist, um jeweils eine Vielzahl von dritten Teilprodukten basierend auf Daten in dem Multiplikator-Eingangsende (550) zu berechnen, indem sie Idle-Bits als Steuersignale verwendet, wobei die Idle-Bits auf 0 gesetzte Bits in dem Multiplikanden-Eingangsende (560) sind; und
der Akkumulator speziell konfiguriert ist, um die Vielzahl von ersten Teilprodukten, die Vielzahl von zweiten Teilprodukten und die Vielzahl von dritten Teilprodukten zu akkumulieren.

11. Multiplikationsberechnungsverfahren, angewendet auf einen Multiplizierer (500), wobei der Multiplizierer (500) ein Multiplikator-Eingangsende (550) und ein Multiplikanden-Eingangsende (560) umfasst, und das Multiplikationsberechnungsverfahren umfasst:
Empfangen von Multiplikatordaten an dem Multiplikator-Eingangsende (550),
wobei die Multiplikatordaten einen ersten Multiplikator (a0) und einen zweiten Multiplikator umfassen und eine Summe aus einer Bitbreite des ersten Multiplikators (a0) und einer Bitbreite des zweiten Multiplikators (a1) kleiner als eine Bitbreite des Multiplikator-Eingangsendes (550) ist, wobei der erste Multiplikator (a0) in niedrigen Bits einer Speicherungsschaltung des Multiplikator-Eingangsendes (550) gespeichert ist, der zweite Multiplikator (a1) in hohen Bits der Speicherungsschaltung des Multiplikator-Eingangsendes (550) gespeichert ist und andere Idle-Bits, die nicht zu dem ersten Multiplikator (a0) und zu dem zweiten Multiplikator (a1) gehören, auf 0 gesetzt sind;
Verwenden einer ersten Maske, um den zweiten Multiplikator (a1) in den Multiplikatordaten zu maskieren, um ein erstes Maskierungsergebnis zu erhalten, und Verwenden einer zweiten Maske, um den ersten Multiplikator (a0) in den Multiplikatordaten zu maskieren, um ein zweites Maskierungsergebnis zu erhalten;
Empfangen eines ersten Multiplikanden (b0) und eines zweiten Multiplikanden an dem Multiplikanden-Eingangsende (560),
wobei eine Summe aus einer Bitbreite des ersten Multiplikanden (b0) (b0) und einer Bitbreite des zweiten Multiplikanden (b1) kleiner als eine Bitbreite des Multiplikand-Eingangsendes (560) ist, wobei Positionen, an denen der erste Multiplikator (a0) und der zweite Multiplikator (a1) in dem Multiplikator-Eingangsende (550) gespeichert sind, die gleichen wie Positionen sind, an denen der erste Multiplikand (b0) und der zweite Multiplikand (b1) in dem Multiplikand-Eingangsende (560) gespeichert sind, oder eine Position, an der der erste Multiplikator (a0) in dem Multiplikator-Eingangsende (550) gespeichert ist, die gleiche wie eine Position ist, an der der zweite Multiplikand (b1) in dem Multiplikand-Eingangsende (560) gespeichert ist, und eine Position, an der der zweite Multiplikator (a1) in dem Multiplikator-Eingangsende (550) gespeichert ist, die gleiche wie eine Position ist, an der der erste Multiplikand (b0) im Multiplikand-Eingangsende (560) gespeichert ist; und
Durchführen einer Multiplikationsoperation an dem ersten Maskierungsergebnis und dem ersten Multiplikanden (b0), um ein Ergebnis des Multiplizierens des ersten Multiplikators (a0) und des ersten Multiplikanden zu erhalten, und Durchführen einer Multiplikationsoperation an dem zweiten Maskierungsergebnis und dem zweiten Multiplikanden (b1), um ein Ergebnis des Multiplizierens des zweiten Multiplikators (a1) und des zweiten Multiplikanden zu erhalten.

12. Multiplikationsberechnungsverfahren nach Anspruch 11, wobei ein Schritt des Durchführens einer Multiplikationsoperation an dem ersten Maskierungsergebnis und dem ersten Multiplikanden (b0), um ein Ergebnis des Multiplizierens des ersten Multiplikators (a0) und des ersten Multiplikanden zu erhalten, und des Durchführens einer Multiplikationsoperation an dem zweiten Maskierungsergebnis und dem zweiten Multiplikanden (b1), um ein Ergebnis des Multiplizierens des zweiten Multiplikators (a1) und des zweiten Multiplikanden (b1) zu erhalten, Folgendes umfasst:
Durchführen einer Booth-Codierung an dem ersten Multiplikanden (b0) und dem zweiten Multiplikanden.

13. Multiplikationsberechnungsverfahren nach Anspruch 12, wobei der Schritt des Durchführens einer Multiplikationsoperation an dem ersten Maskierungsergebnis und dem ersten Multiplikanden (b0), um ein Ergebnis des Multiplizierens des ersten Multiplikators (a0) und des ersten Multiplikanden zu erhalten, und des Durchführens einer Multiplikationsoperation an dem zweiten Maskierungsergebnis und dem zweiten Multiplikanden (b1), um ein Ergebnis des Multiplizierens des zweiten Multiplikators (a1) und des zweiten Multiplikanden (b1) zu erhalten, ferner Folgendes umfasst:
Durchführen einer Teilproduktberechnung basierend auf durch die Booth-Codierung erzeugten Codierungsergebnissen, um eine Vielzahl von Teilprodukten zu erhalten;
und Akkumulieren der Vielzahl von Teilprodukten.

14. Multiplikationsverarbeitungssystem, wobei das Multiplikationsverarbeitungssystem eine Konfigurationsdatei aus einem Speicher liest, der mit dem Multiplikationsverarbeitungssystem gekoppelt ist, sodass das Multiplikationsverarbeitungssystem als der Multiplizierer (500) nach einem der Ansprüche 1 bis 10 konfigurierbar ist.

15. Computerlesbares Speicherungsmedium, wobei das computerlesbare Speicherungsmedium ein Computerprogramm speichert; und wenn das Computerprogramm durch einen Prozessor ausgeführt wird, das Verfahren nach einem der Ansprüche 11 bis 13 implementiert wird.

## Revendications

1. Multiplicateur (500), dans lequel le multiplicateur (500) comprend :
une extrémité d'entrée de multiplicateur (550), configurée pour recevoir des données de multiplicateur, dans lequel les données de multiplicateur comprennent un premier multiplicateur (a0) et un second multiplicateur (a1), et une somme d'une largeur de bits du premier multiplicateur (a0) et d'une largeur de bits du second multiplicateur (a1) est inférieure à une largeur de bits de l'extrémité d'entrée de multiplicateur (550), dans lequel l'extrémité d'entrée de multiplicateur (550) est en outre configurée pour stocker le premier multiplicateur (a0) dans des bits de poids faible d'un circuit de stockage de l'extrémité d'entrée de multiplicateur (550) et le second multiplicateur (a1) dans des bits de poids fort du circuit de stockage de l'extrémité d'entrée de multiplicateur (550) et pour mettre à 0 des bits inactifs autres que le premier multiplicateur (a0) et le second multiplicateur (a1) ;
un circuit de masquage (540) comportant un premier masque (342) et un second masque (344), le premier masque (342) étant configuré pour masquer le second multiplicateur (a1) dans les données de multiplicateur afin d'obtenir un premier résultat de masquage, et le second masque (344) étant configuré pour masquer le premier multiplicateur (a0) dans les données de multiplicateur afin d'obtenir un second résultat de masquage ;
une extrémité d'entrée de multiplicande (560), configurée pour recevoir un premier multiplicande (b0) et un second multiplicande (b1), dans lequel une somme d'une largeur de bits du premier multiplicande (b0) et d'une largeur de bits du second multiplicande (b1) est inférieure à une largeur de bits de l'extrémité d'entrée de multiplicande (560), dans lequel des positions où le premier multiplicateur (a0) et le second multiplicateur (a1) sont stockés dans l'extrémité d'entrée de multiplicateur (550) sont les mêmes que des positions où le premier multiplicande (b0) et le second multiplicande (b1) sont stockés dans l'extrémité d'entrée de multiplicande (560), ou une position où le premier multiplicateur (a0) est stocké dans l'extrémité d'entrée de multiplicateur (550) est la même qu'une position où le second multiplicande (b1) est stocké dans l'extrémité d'entrée de multiplicande (560), et une position où le second multiplicateur (a1) est stocké dans l'extrémité d'entrée de multiplicateur (550) est la même qu'une position où le premier multiplicande (b0) est stocké dans l'extrémité d'entrée de multiplicande (560) ; et
un circuit d'opération de multiplication (502), configuré pour réaliser une opération de multiplication sur le premier résultat de masquage et le premier multiplicande (b0) afin d'obtenir un résultat de multiplication du premier multiplicateur (a0) et du premier multiplicande, et réaliser une opération de multiplication sur le second résultat de masquage et le second multiplicande (b1) afin d'obtenir un résultat de multiplication du second multiplicateur (a1) et du second multiplicande (b1).

2. Multiplicateur (500) selon la revendication 1, dans lequel le circuit d'opération de multiplication (502) comprend un codeur de Booth.

3. Multiplicateur (500) selon la revendication 2, dans lequel le circuit d'opération de multiplication (502) comprend en outre :
un circuit de calcul de produit partiel, configuré pour réaliser un calcul de produit partiel sur la base d'un résultat de codage généré par le codeur de Booth ; et
un accumulateur, configuré pour accumuler une pluralité de produits partiels générés par le circuit de calcul de produit partiel.

4. Multiplicateur (500) selon la revendication 3, dans lequel
le codeur de Booth comprend une pluralité de sous-codeurs, configurés pour réaliser un codage de Booth sur le premier multiplicande (b0) afin d'obtenir au moins un premier résultat de codage, et réaliser un codage de Booth sur le second multiplicande (b1) afin d'obtenir au moins un second résultat de codage ;
le circuit de calcul de produit partiel est spécifiquement configuré pour calculer au moins un premier produit partiel de l'au moins un premier résultat de codage et du premier résultat de masquage, et calculer au moins un deuxième produit partiel de l'au moins un second résultat de codage et du second résultat de masquage ; et
l'accumulateur est spécifiquement configuré pour réaliser une accumulation sur l'au moins un premier produit partiel afin d'obtenir le résultat de multiplication du premier multiplicateur (a0) et du premier multiplicande, et réaliser une accumulation sur l'au moins un deuxième produit partiel afin d'obtenir le résultat de multiplication du second multiplicateur (a1) et du second multiplicande.

5. Multiplicateur (500) selon l'une quelconque des revendications 1 à 4, dans lequel le multiplicateur (500) comprend en outre un additionneur, et l'additionneur est configuré pour :
additionner le résultat de multiplication du premier multiplicateur (a0) et du premier multiplicande (b0) et le résultat de multiplication du second multiplicateur (a1) et du second multiplicande.

6. Multiplicateur (500) selon l'une quelconque des revendications 1 à 4, dans lequel le multiplicateur (500) comprend en outre un décaleur, et le décaleur est configuré pour : décaler le résultat de multiplication du premier multiplicateur (a0) et du premier multiplicande (b0) et le résultat de multiplication du second multiplicateur (a1) et du second multiplicande.

7. Multiplicateur (500) selon l'une quelconque des revendications 4 à 6, dans lequel des données dans l'extrémité d'entrée de multiplicande (560) comprennent le premier multiplicande (b0) situé au niveau d'un bit de poids faible de l'extrémité d'entrée de multiplicande (560), le second multiplicande (b1) situé au niveau d'un bit de poids fort de l'extrémité d'entrée de multiplicande (560), un bit étendu de 0 inséré au niveau d'une extrémité d'un bit de poids faible du premier multiplicande, et un autre bit mis à 0 autre que le premier multiplicande, le second multiplicande et le bit étendu dans l'extrémité d'entrée de multiplicande (560) ; et
les données de multiplicateur comprennent :
le premier multiplicateur (a0) situé au niveau du bit de poids faible de l'extrémité d'entrée de multiplicateur (550), le second multiplicateur (a1) situé au niveau du bit de poids fort de l'extrémité d'entrée de multiplicande (560), et un autre bit mis à 0 autre que le premier multiplicateur (a0) et le second multiplicateur (a1) dans l'extrémité d'entrée de multiplicateur (550), dans lequel une position du premier multiplicateur (a0) dans l'extrémité d'entrée de multiplicateur (550) est la même qu'une position du premier multiplicande (b0) dans l'extrémité d'entrée de multiplicande (560), et une position du second multiplicateur (a1) dans l'extrémité d'entrée de multiplicateur (550) est la même qu'une position du second multiplicande (b1) dans l'extrémité d'entrée de multiplicande (560).

8. Multiplicateur (500) selon la revendication 7, dans lequel le premier multiplicande (b0) et le second multiplicande (b1) sont séparés par au moins un bit de 0, le premier multiplicateur (a0) et le second multiplicateur (a1) sont séparés par au moins un bit de 0, et le multiplicateur (500) comprend en outre un sélecteur, dans lequel le sélecteur est configuré pour :
délivrer des données d'un bit de poids fort du premier multiplicande (b0) à un bit de poids fort d'un premier sous-codeur correspondant, et délivrer des données 0 à un bit de poids faible d'un sous-codeur qui est adjacent au premier sous-codeur et qui code un bit inactif, dans lequel le bit inactif est un bit mis à 0 entre le premier multiplicande (b0) et le second multiplicande.

9. Multiplicateur (500) selon la revendication 7, dans lequel le bit de poids fort du premier multiplicande (b0) est adjacent à un bit de poids faible du second multiplicande, un bit de poids fort du premier multiplicateur (a0) est adjacent à un bit de poids faible du second multiplicateur, et le multiplicateur comprend en outre un sélecteur, dans lequel le sélecteur est configuré pour :
délivrer des données du bit de poids fort du premier multiplicande (b0) à un bit de poids fort d'un premier sous-codeur correspondant, et délivrer des données 0 à un bit de poids faible d'un second sous-codeur, dans lequel le second sous-codeur est un sous-codeur qui est adjacent au premier sous-codeur et qui code le second multiplicande.

10. Multiplicateur (500) selon la revendication 4, dans lequel le sous-circuit de produit partiel comprend une pluralité de premiers sous-circuits de produit partiel, une pluralité de deuxièmes sous-circuits de produit, et une pluralité de troisièmes sous-circuits de produit, dans lequel
la pluralité de premiers sous-circuits de produit partiel sont configurés pour calculer respectivement une pluralité de premiers produits partiels sur la base du premier résultat de masquage en utilisant une pluralité de résultats de codage du premier multiplicande (b0) en tant que signaux de commande ;
la pluralité de deuxièmes sous-circuits de produit partiel sont configurés pour calculer respectivement une pluralité de deuxièmes produits partiels sur la base du second résultat de masquage en utilisant une pluralité de résultats de codage du second multiplicande (b1) en tant que signaux de commande ;
la pluralité de troisièmes sous-circuits de produit partiel sont configurés pour calculer respectivement une pluralité de troisièmes produits partiels sur la base de données dans l'extrémité d'entrée de multiplicateur (550) en utilisant des bits inactifs en tant que signaux de commande, dans lequel les bits inactifs sont des bits mis à 0 dans l'extrémité d'entrée de multiplicande (560) ; et
l'accumulateur est spécifiquement configuré pour accumuler la pluralité de premiers produits partiels, la pluralité de deuxièmes produits partiels et la pluralité de troisièmes produits partiels.

11. Procédé de calcul de multiplication, appliqué à un multiplicateur (500), dans lequel le multiplicateur (500) comprend une extrémité d'entrée de multiplicateur (550) et une extrémité d'entrée de multiplicande (560), et le procédé de calcul de multiplication comprend :
la réception de données de multiplicateur au niveau de l'extrémité d'entrée de multiplicateur (550),
dans lequel les données de multiplicateur comprennent un premier multiplicateur (a0) et un second multiplicateur, et une somme d'une largeur de bits du premier multiplicateur (a0) et d'une largeur de bits du second multiplicateur (a1) est inférieure à une largeur de bits de l'extrémité d'entrée de multiplicateur (550), dans lequel le premier multiplicateur (a0) est stocké dans des bits de poids faible d'un circuit de stockage de l'extrémité d'entrée de multiplicateur (550), le second multiplicateur (a1) est stocké dans des bits de poids fort du circuit de stockage de l'extrémité d'entrée de multiplicateur (550), et des bits inactifs autres que le premier multiplicateur (a0) et le second multiplicateur (a1) sont mis à 0 ;
l'utilisation d'un premier masque pour masquer le second multiplicateur (a1) dans les données de multiplicateur afin d'obtenir un premier résultat de masquage, et
l'utilisation d'un second masque pour masquer le premier multiplicateur (a0) dans les données de multiplicateur afin d'obtenir un second résultat de masquage ;
la réception d'un premier multiplicande (b0) et d'un second multiplicande au niveau de l'extrémité d'entrée de multiplicande (560),
dans lequel une somme d'une largeur de bits du premier multiplicande (b0) (b0) et d'une largeur de bits du second multiplicande (b1) est inférieure à une largeur de bits de l'extrémité d'entrée de multiplicande (560), dans lequel des positions où le premier multiplicateur (a0) et le second multiplicateur (a1) sont stockés dans l'extrémité d'entrée de multiplicateur (550) sont les mêmes que des positions où le premier multiplicande (b0) et le second multiplicande (b1) sont stockés dans l'extrémité d'entrée de multiplicande (560), ou une position où le premier multiplicateur (a0) est stocké dans l'extrémité d'entrée de multiplicateur (550) est la même qu'une position où le second multiplicande (b1) est stocké dans l'extrémité d'entrée de multiplicande (560), et une position où le second multiplicateur (a1) est stocké dans l'extrémité d'entrée de multiplicateur (550) est la même qu'une position où le premier multiplicande (b0) est stocké dans l'extrémité d'entrée de multiplicande (560) ; et
la réalisation d'une opération de multiplication sur le premier résultat de masquage et le premier multiplicande (b0) pour obtenir un résultat de multiplication du premier multiplicateur (a0) et du premier multiplicande, et la réalisation d'une opération de multiplication sur le second résultat de masquage et le second multiplicande (b1) pour obtenir un résultat de multiplication du second multiplicateur (a1) et du second multiplicande.

12. Procédé de calcul de multiplication selon la revendication 11, dans lequel une étape consistant à réaliser une opération de multiplication sur le premier résultat de masquage et le premier multiplicande (b0) pour obtenir un résultat de multiplication du premier multiplicateur (a0) et du premier multiplicande, et à réaliser une opération de multiplication sur le second résultat de masquage et le second multiplicande (b1) pour obtenir un résultat de multiplication du second multiplicateur (a1) et du second multiplicande (b1) comprend :
la réalisation d'un codage de Booth sur le premier multiplicande (b0) et le second multiplicande.

13. Procédé de calcul de multiplication selon la revendication 12, dans lequel l'étape consistant à réaliser une opération de multiplication sur le premier résultat de masquage et le premier multiplicande (b0) pour obtenir un résultat de multiplication du premier multiplicateur (a0) et du premier multiplicande, et à réaliser une opération de multiplication sur le second résultat de masquage et le second multiplicande (b1) pour obtenir un résultat de multiplication du second multiplicateur (a1) et du second multiplicande (b1) comprend en outre :
la réalisation d'un calcul de produit partiel sur la base de résultats de codage générés par le codage de Booth, pour obtenir une pluralité de produits partiels ; et
l'accumulation de la pluralité de produits partiels.

14. Système de traitement de multiplication, dans lequel le système de traitement de multiplication lit un fichier de configuration à partir d'une mémoire couplée au système de traitement de multiplication, de sorte que le système de traitement de multiplication peut être configuré en tant que multiplicateur (500) selon l'une quelconque des revendications 1 à 10.

15. Support de stockage lisible par ordinateur, dans lequel le support de stockage lisible par ordinateur stocke un programme informatique ; et lorsque le programme informatique est exécuté par un processeur, le procédé selon l'une quelconque des revendications 11 à 13 est mis en œuvre.
